# EUROPEAN PATENT APPLICATION

(11) **EP 4 675 849 A1**
(43) Date of publication of application: **07.01.2026**
(21) Application number: 24785264.3
(22) Date of filing: 04.04.2024
(51) Int. Cl.: H01Q 1/24, H01Q 1/38, H04M 1/02, H01Q 5/335, H04B 1/40

(54) **ELECTRONIC DEVICE COMPRISING ANTENNA**

(30) Priority: 04.04.2023 KR 20230044256; 18.05.2023 KR 20230064624
(71) Applicant: Samsung Electronics Co., Ltd., Suwon-si, Gyeonggi-do 16677 (KR)
(72) Inventor: PARK, Sungkoo, Suwon-si, Gyeonggi-do 16677 (KR); KIM, Seunghwan, Suwon-si, Gyeonggi-do 16677 (KR); YUN, Himchan, Suwon-si, Gyeonggi-do 16677 (KR); LEE, Kyungjae, Suwon-si, Gyeonggi-do 16677 (KR); LEE, Kookjoo, Suwon-si, Gyeonggi-do 16677 (KR); CHUN, Jaebong, Suwon-si, Gyeonggi-do 16677 (KR); CHOI, Donguk, Suwon-si, Gyeonggi-do 16677 (KR); HWANG, Soonho, Suwon-si, Gyeonggi-do 16677 (KR)
(74) Representative: HGF
(86) International application number: PCT/KR2024/004425
(87) International publication number: WO 2024/210564

(57) **Abstract**

According to an example embodiment of the present invention, an electronic device is provided, the electronic device comprising: a side which provides at least a portion of a side surface of the electronic device and includes a first conductive portion, a second conductive portion, and a third conductive portion that are physically separated from each other; a wireless communication circuit configured to transmit and/or receive a signal in at least one selected or designated frequency band through the first conductive portion and the third conductive portion; a first electrical path electrically connecting the first conductive portion and the wireless communication circuit; and a second electrical path electrically connecting the third conductive portion and the first electrical path, wherein the second conductive portion is positioned between the first conductive portion and the third conductive portion and electrically and/or physically connected to a ground region included in the electronic device.

## Description

### [Technical Field]

The disclosure relates to an electronic device including an antenna.

### [Background Art]

An electronic device may include a plurality of antennas to support various communication technologies. As the range of available applications expands, the number of antennas included in electronic devices is increasing.

The above-described information may be provided as related art for the purpose of helping to understand the disclosure. No claim or determination is made as to whether any of the foregoing may be applied as prior art with respect to the disclosure.

### [Disclosure of Invention]

### [Technical Problem]

It may be difficult to design an antenna for securing antenna radiation performance due to structural complexity in a constrained space within an electronic device.

Various embodiments of the disclosure provide an electronic device including an antenna for securing or improving antenna radiation performance. Various embodiments of the disclosure are provided to solve or at least alleviate the above-mentioned problems.

The technical problems to be addressed by this disclosure are not limited to those described above, and other technical problems not mentioned above may be understood by a person ordinarily skilled in the related art to which the disclosure pertains.

### [Solution to Problem]

According to an example embodiment of the disclosure, an electronic device is provided. The electronic device may include a side, a wireless communication circuit, a first electrical path, and a second electrical path. The side provides at least a portion of the side surface of the electronic device. The side may include a first conductive portion, a second conductive portion, and a third conductive portion that are physically separated from each other. The wireless communication circuit may be configured to transmit and/or receive a signal of at least one selected or predetermined frequency band through the first conductive portion and the third conductive portion. The first electrical path may electrically connect the first conductive portion and the wireless communication circuit. The second electrical path may electrically connect the third conductive portion and the first electrical path. The second conductive portion may be positioned between the first conductive portion and the third conductive portion. The second conductive portion may be electrically and/or physically connected to a ground area included in the electronic device.

### [Advantageous Effects of Invention]

An electronic device including an antenna according to example embodiments of the disclosure may secure or improve antenna radiation performance.

In addition, effects that may be obtained or predicted by various embodiments of the disclosure will be directly or implicitly disclosed in the detailed description of the embodiments of the disclosure.

### [Brief Description of Drawings]

The above and other aspects, features, and advantages of specific embodiments of the disclosure will become more apparent from the following detailed description taken in conjunction with the accompanying drawings.
FIG. 1 is a block diagram of an electronic device according to an embodiment of the disclosure in a network environment.
FIG. 2 is a view illustrating appearances of the foldable electronic device according to an embodiment of the disclosure in an unfolded state. FIG. 3 is a view illustrating appearances of the foldable electronic device according to an embodiment of the disclosure in a folded state.
FIG. 4 is a cross-sectional view of the foldable electronic device according to an embodiment of the disclosure, taken along line D-D' in FIG. 2.
FIG. 5 is a view illustrating a portion of the foldable electronic device according to various embodiments of the disclosure.
FIG. 6 is a view illustrating a foldable electronic device according to an embodiment of the disclosure.
FIG. 7 is a view illustrating a portion of a foldable electronic device according to an embodiment of the disclosure, and a cross-section of the foldable electronic device taken along the line H-H'.
FIG. 8 is a view illustrating a portion of a foldable electronic device according to an embodiment of the disclosure, and a cross-section of the foldable electronic device taken along the line I-I'.
FIG. 9 is a view illustrating a graph showing resonance characteristics of the foldable electronic device of FIG. 6 according to an embodiment of the disclosure.
FIG. 10 is a view illustrating an electric field distribution of the foldable electronic device according to an embodiment of the disclosure.
FIG. 11 is a view illustrating graphs showing antenna radiation efficiencies of the foldable electronic device of FIG. 6 according to an embodiment of the disclosure, a foldable electronic device of a first comparative example, and a foldable electronic device of a second comparative example.
FIG. 12 is a view illustrating graphs showing transmission losses in the foldable electronic device of FIG. 6 according to an embodiment of the disclosure and in a foldable electronic device of a third comparative example.
FIG. 13 is a view illustrating a foldable electronic device according to an embodiment of the disclosure.
FIG. 14 is a view illustrating a foldable electronic device according to an embodiment of the disclosure.
FIG. 15 is a view illustrating a foldable electronic device according to various embodiments of the disclosure and a portion of the foldable electronic device.
FIG. 16 is a view illustrating a foldable electronic device according to various embodiments of the disclosure in an unfolded state and a portion of the foldable electronic device.
FIG. 17 is a view illustrating a bar-type electronic device according to various embodiments of the disclosure.

### [Mode for the Invention]

Hereinafter, various example embodiments of the disclosure disclosed herein will be described in greater detail with reference to the accompanying drawings.

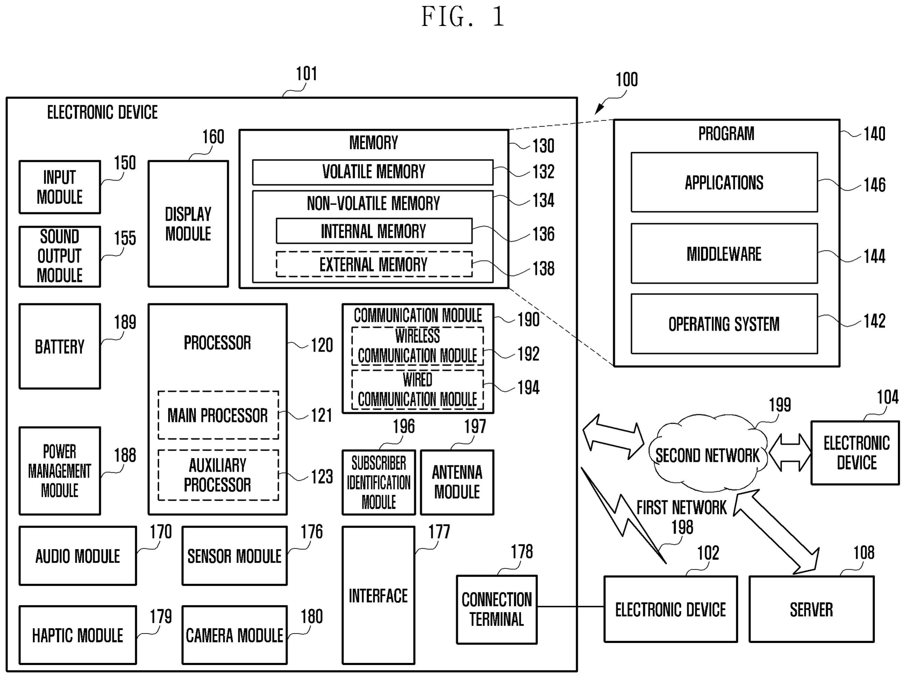

FIG. 1 is a block diagram of an electronic device 101 in a network environment 100 according to an embodiment of the disclosure.

Referring to FIG. 1, the electronic device 101 in the network environment 100 may communicate with an external electronic device 102 via a first network 198 (e.g., a short-range wireless communication network), or at least one of an external electronic device 104 or a server 108 via a second network 199 (e.g., a long-range wireless communication network). The electronic device 101 may communicate with the external electronic device 104 via the server 108. The electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, and/or an antenna module 197. In various embodiments of the disclosure, at least one (e.g., the connection terminal 178) of the components may be omitted from the electronic device 101, or one or more other components may be added in the electronic device 101. In various embodiments of the disclosure, some of the components may be implemented as single integrated circuitry. For example, the sensor module 176, the camera module 180, or the antenna module 197 may be implemented as embedded in single component (e.g., the display module 160).

The processor 120 may execute, for example, software (e.g., a program 140) to control at least one other component (e.g., a hardware or software component) of the electronic device 101 coupled with the processor 120, and may perform various data processing or computation. As at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. The processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active state (e.g., executing an application). The auxiliary processor 123 (e.g., an ISP or a CP) may be implemented as part of another component (e.g., the camera module 180 or the communication module 190) functionally related to the auxiliary processor 123. According to an embodiment of the disclosure, the auxiliary processor 123 (e.g., a neural network processing device) may include a hardware structure specified for processing an artificial intelligence model. The artificial intelligence model may be created through machine learning. Such learning may be performed, for example, in the electronic device 101 itself on which the artificial intelligence model is performed, or may be performed through a separate server (e.g., the server 108). The learning algorithms may include, for example, supervised learning, unsupervised learning, semi-supervised learning, or reinforcement learning, but is not limited thereto. The artificial intelligence model may include a plurality of artificial neural network layers. The artificial neural network may be any of a deep neural network (DNN), a convolutional neural network (CNN), a recurrent neural network (RNN), a restricted Boltzmann machine (RBM), a deep belief network (DBN), a bidirectional recurrent DNN (BRDNN), a deep Q-network, or a combination of two or more of the above-mentioned networks, but is not limited the above-mentioned examples. In addition to the hardware structure, the artificial intelligence model may additionally or alternatively include a software structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 and/or the non-volatile memory 134.

The program 140 may be stored in the memory 130 as software, and may include, for example, an operating system (OS) 142, middleware 144, and/or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record, and the receiver may be used for incoming calls. The receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. The display module 160 may include touch circuitry (e.g., a touch sensor) adapted to detect a touch, or sensor circuitry (e.g., a pressure sensor) adapted to measure the intensity of force incurred by the touch.

The audio module 170 may convert a sound into an electrical signal and vice versa. The audio module 170 may obtain the sound via the input module 150, or output the sound via the sound output module 155 or a headphone of an external electronic device (e.g., the external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. The interface 177 may include, for example, a high-definition multimedia interface (HDMI), a universal serial bus (USB) interface, a secure digital (SD) card interface, and/or an audio interface.

The connecting terminal 178 may include a connector via which the electronic device 101 may be physically connected with the external electronic device (e.g., the external electronic device 102). The connecting terminal 178 may include, for example, an HDMI connector, a USB connector, an SD card connector, and/or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. The haptic module 179 may include, for example, a motor, a piezoelectric element, or an electric stimulator.

The camera module 180 may capture a still image or moving images. The camera module 180 may include one or more lenses, image sensors, ISPs, or flashes.

The power management module 188 may manage power supplied to or consumed by the electronic device 101. The power management module 188 may be implemented as at least part of, for example, a power management integrated circuit (PMIC).

The battery 189 may supply power to at least one component of the electronic device 101. The battery 189 may include, for example, a primary cell which is not rechargeable, a secondary cell which is rechargeable, and/or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more CPs that are operable independently from the processor 120 (e.g., the AP) and supports a direct (e.g., wired) communication or a wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BLUETOOTH, wireless-fidelity (Wi-Fi) direct, or IR data association (IrDA)) or the second network 199 (e.g., a long-range communication network, such as a legacy cellular network, a 5^{th} generation (5G) network, a next generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4^{th} generation (4G) network, and next-generation communication technology, e.g., new radio (NR) access technology. The NR access technology may support highspeed transmission of high-capacity data (i.e., enhanced mobile broadband (eMBB)), minimization of terminal power and connection of multiple terminals (massive machine type communications (mMTC)), or high reliability and low latency (ultra-reliable and low-latency communications (URLLC)). The wireless communication module 192 may support a high-frequency band (e.g., a mmWave band) to achieve, for example, a high data transmission rate. The wireless communication module 192 may support various technologies for securing performance in a high-frequency band, such as beamforming, massive multiple-input and multiple-output (MIMO), full-dimensional MIMO (FD-MIMO), array antenna, analog beam-forming, or large-scale antenna. The wireless communication module 192 may support various requirements specified in the electronic device 101, an external electronic device (e.g., external the electronic device 104), or a network system (e.g., the second network 199). According to an embodiment of the disclosure, the wireless communication module 192 may support a peak data rate for implementing eMBB (e.g., 20Gbps or more), loss coverage for implementing mMTC (e.g., 164dB or less), or U-plane latency for realizing URLLC (e.g., 0.5ms or less for each of downlink (DL) and uplink (UL) or 1ms or less for round trip).

The antenna module 197 may transmit or receive a signal or power to or from the outside (e.g., the external electronic device) of the electronic device 101. The antenna module 197 may include an antenna including a radiating element including a conductive material or a conductive pattern formed in or on a substrate (e.g., a printed circuit board (PCB)). The antenna module 197 may include a plurality of antennas (e.g., an antenna array). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. Another component (e.g., a radio frequency integrated circuit (RFIC)) other than the radiating element may be additionally formed as part of the antenna module 197.

According to various embodiments of the disclosure, the antenna module 197 may form a mmWave antenna module. According to an embodiment of the disclosure, the mmWave antenna module may include a PCB, an RFIC that is disposed on or adjacent to a first surface (e.g., the bottom surface) of the PCB and is capable of supporting a predetermined high-frequency band (e.g., a mmWave band), and a plurality of antennas (e.g., array antennas) that is disposed on or adjacent to a second surface (e.g., the top surface or the side surface) of the PCB and is capable of transmitting or receiving a signal of the predetermined high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

Commands or data may be transmitted or received between the electronic device 101 and the external electronic device 104 via the server 108 coupled with the second network 199. Each of the external electronic devices 102 or 104 may be a device of a same type as, or a different type, from the electronic device 101. All or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide an ultra-low delay service using, for example, distributed computing or MEC. In another embodiment of the disclosure, the external electronic device 104 may include an internet of things (IoT) device. The server 108 may be an intelligent server using machine learning and/or neural networks. According to an embodiment of the disclosure, the external electronic device 104 or the server 108 may be included in the second network 199. The electronic device 101 may be applied to an intelligent service (e.g., smart home, smart city, smart car, or healthcare) based on 5G communication technology or IoT-related technology.

An electronic device according to an embodiment of the disclosure may be one of various types of electronic devices. The electronic devices may include a portable communication device (e.g., a smartphone), a computer device, a portable multimedia device, a portable medical device, a camera, a wearable device, or a home appliance. However, the electronic device is not limited to any of those described above.

Various embodiments of the disclosure and the terms used herein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). If an element (e.g., a first element) is referred to, with or without the term "operatively" or "communicatively," as "coupled with," "coupled to," "connected with," or "connected to" another element (e.g., a second element), the element may be coupled with the other element directly (e.g., wiredly), wirelessly, or via a third element.

The term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment of the disclosure, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PLAYSTORE^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

Each component (e.g., a module or a program) of the above-described components may include a single entity or multiple entities. One or more of the above-described components may be omitted, or one or more other components may be added. Alternatively or additionally, a plurality of components (e.g., modules or programs) may be integrated into a single component. In such a case, the integrated component may perform one or more functions of each of the plurality of components in the same or similar manner as they are performed by a corresponding one of the plurality of components before the integration. Operations performed by the module, the program, or another component may be carried out sequentially, in parallel, repeatedly, or heuristically, or one or more of the operations may be executed in a different order or omitted, or one or more other operations may be added.

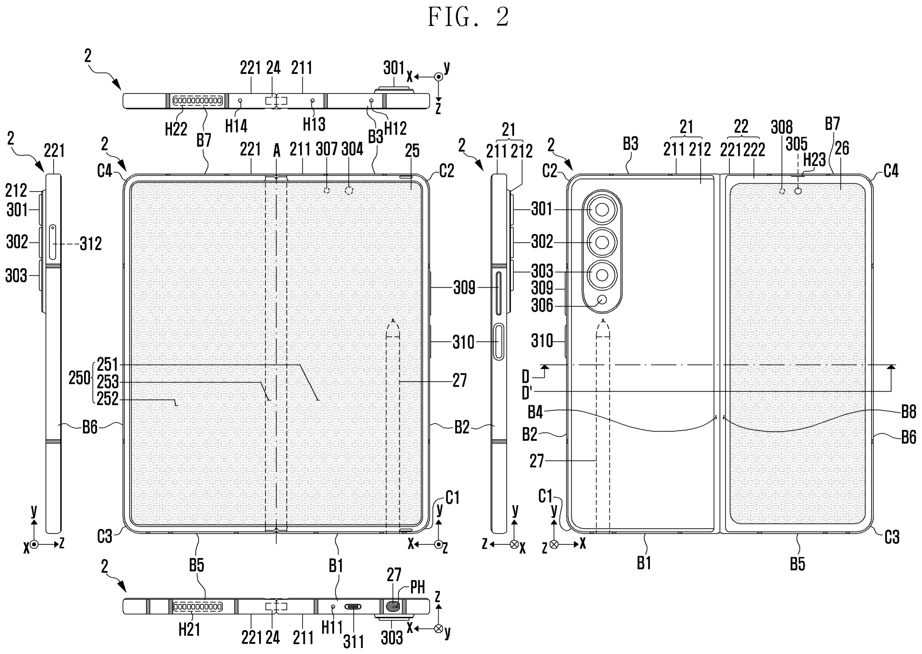

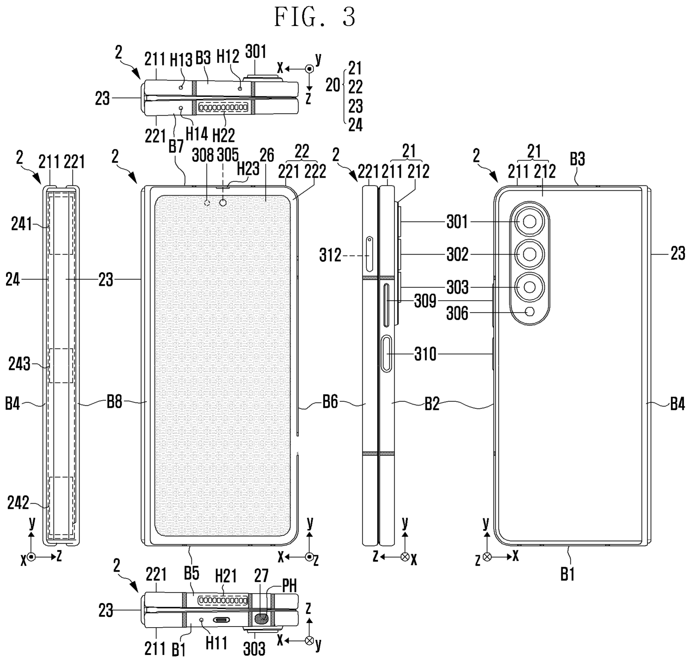

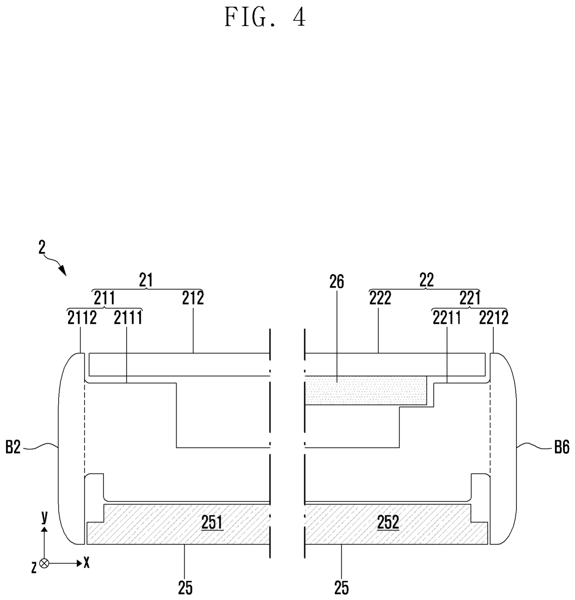

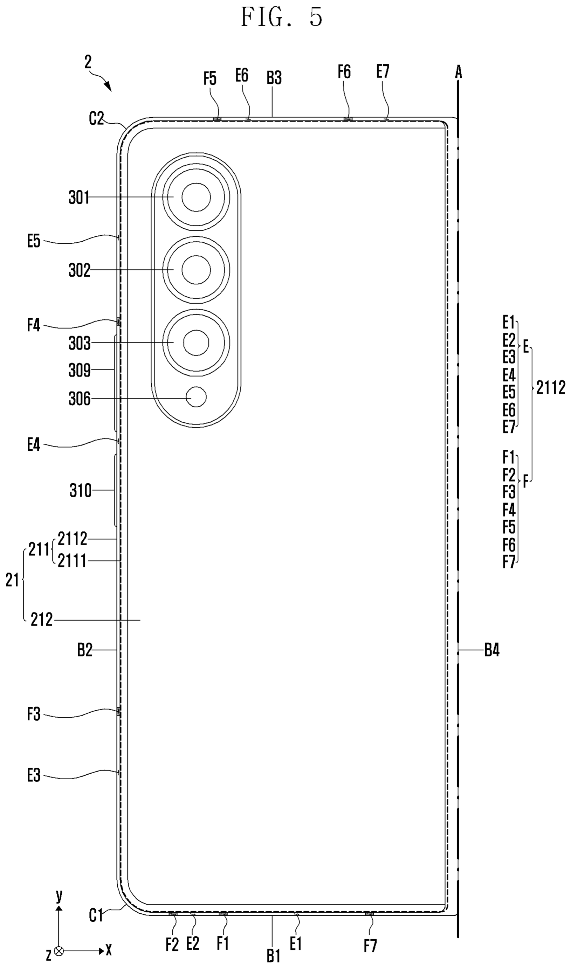

FIG. 2 is a view illustrating appearances of a foldable electronic device 2 in an unfolded state (or a flat state), according to various embodiments embodiment of the disclosure. FIG. 3 is a view illustrating appearances of the foldable electronic device 2 according to an embodiment of the disclosure in a folded state (or a folding state). FIG. 4 is a cross-sectional view of the foldable electronic device 2 according to an embodiment of the disclosure, taken along line D-D' in FIG. 2. FIG. 5 is a view illustrating a portion of the foldable electronic device 2 according to various embodiments of the disclosure.

Referring to FIGS. 2, 3, 4, and 5, the foldable electronic device 2 may include a foldable housing 20, a first display module (e.g., a flexible display module or a foldable display module) 25, a second display module 26, a pen input device 27, a first camera module 301, a second camera module 302, a third camera module 303, a fourth camera module 304, a fifth camera module 305, a light-emitting module 306, a sensor module 307, a first sound input module (not illustrated separately), a second sound input module (not illustrated separately), a third sound input module (not illustrated separately), a fourth sound input module (not illustrated separately), a first sound output module (not illustrated separately), a second sound output module (not illustrated separately), a third sound output module (not illustrated separately), a key input module, a first connection terminal 311, and/or a second connection terminal 312.

According to an embodiment, the foldable housing 20 may include a first housing (also referred to as a first housing portion or a first housing structure) 21, a second housing (also referred to as a second housing portion or a second housing structure) 22, a hinge housing 23, and/or a hinge portion 24. The first housing 21 and the second housing 22 may be connected through the hinge portion 24 and may be mutually rotatable with respect to the hinge portion 24. The hinge portion 24 may include one or more hinge modules (or hinge assemblies) (e.g., the first hinge module 241, the second hinge module 242, and/or the third hinge module 243 in FIG. 3).

According to an embodiment, the first display module 25 may include a display area 250. The display area 250 may include a first display area 251, a second display area 252, and a third display area 253 interconnecting the first display area 251 and the second display area 252 (or between the first display area 251 and the second display area 252). A first screen area (or a first active area) capable of displaying an image may be provided through the first display area 251. A second screen area (or a second active area) capable of displaying an image may be provided through the second display area 252. A third screen area (or a third active area) capable of displaying an image may be provided through the third display area 253.

According to an embodiment, the first display area 251 may be positioned corresponding to the first housing 21. The second display area 252 may be positioned to correspond to the second housing 22. The third display area 253 may be positioned corresponding to the hinge portion 24. The first display area 251 may be disposed in the first housing 21, and the shape of the first display area 251 may be maintained by being supported by the first housing 21. The second display area 252 may be disposed in the second housing 22, and the shape of the second display area 252 may be maintained by being supported by the second housing 22. The first display area 251 and the second display area 252 may be provided, for example, to be substantially flat. The unfolded state of the foldable electronic device 2 may be the state in which the third display area 253 is arranged to be substantially flat. When the foldable electronic device 2 is in the unfolded state, the first display area 251 and the second display area 252 may form an angle of about 180 degrees therebetween, and the display area 250 may be provided (or arranged) in a substantially flat form. When the foldable electronic device 2 is in the unfolded state, due to the relative position between the first display area 251 disposed on the first housing 21 and the second display area 252 disposed on the second housing 22, the third display area 253 may be laid flat. When the foldable electronic device 2 is in the unfolded state, the third display area 253 may be pulled from opposite sides by the first display area 251 and the second display area 252, and the pulling force may be provided to reduce damage to the third display area 253 while allowing the third display area 253 to be laid flat. When the foldable electronic device 2 is in the unfolded state, the third display area 253 may be provided with an extended width that may be placed flat while reducing stress by being pulled by the first display area 251 and the second display area 252.

According to an embodiment, when the foldable electronic device 2 is in the unfolded state, the hinge portion 24 may support the third display area 253 of the first display module 25. When an external force (e.g., an external pressure such as a touch input made by using a user's finger or a touch input made by using an electronic pen) is applied to the third display area 253 when the foldable electronic device 2 is in the unfolded state, the hinge portion 24 may contribute to maintaining the third display area 253 to be flat by reducing sagging of the third display area 253. The hinge portion 24 may be configured to reduce the effect of an external impact on the third display area 253 when the external impact is applied due to a reason such as a drop when the foldable electronic device 2 is in the unfolded state. For example, the hinge portion 24 may support the third display area 253 such that, when the foldable electronic device 2 is in the unfolded state, the third display area 253 can be arranged to be flat without sagging or with reduced sagging, thereby reducing a crease phenomenon.

According to an embodiment, the display area 250 of the first display module 25 may substantially provide the "front surface" in the exterior of the foldable electronic device 2. The front surface of the foldable electronic device 2 may include a first front surface area provided by the first display area 251, a second front surface area provided by the second display area 252, and a third surface area provided by the third display area 253. The illustrated coordinate axes are indicated based on the first housing 21, and the +z-axis direction may be defined or interpreted as a direction where the substantially flat first front surface area is oriented. When the foldable electronic device 2 is in the unfolded state, the front surface of the foldable electronic device 2 may be provided to be substantially flat.

According to an embodiment, the foldable electronic device 2 may be implemented in an infolding type in which the display area 250 of the first display module 25 (or the front surface of the foldable electronic device 2 where the display area 250 is visually visible) is foldable inward. FIG. 3 illustrates the fully folded state of the foldable electronic device 2 in which the first housing 21 and the second housing 22 are disposed such that they cannot come closer to each other anymore. When the foldable electronic device 2 is in the fully folded state, the first display area 251 and the second display area 252 (or the first front surface area and the second front surface area) may face each other. When the foldable electronic device 2 is in the fully folded state, the third display area 253 may be arranged in a bent shape. In the fully folded state of the foldable electronic device 2, the angle between the first housing 21 and the second housing 22 (also referred to as the angle between the first display area 251 and the second display area 252 or the angle between the first front surface area and the second front surface area) may range from about 0 degrees to about 10 degrees, and the display area 250 may be substantially invisible. Although not illustrated separately, the intermediate state of the foldable electronic device 2 may be a state between the unfolded state and the fully folded state. In the intermediate state in which the angle between the first housing 21 and the second housing 22 is equal to or greater than a certain angle, a use environment in which a user does not have substantial difficulty in using the display area 250 may be provided. Hereinafter, the "folded state of the foldable electronic device 2" described in the disclosure may refer to the fully folded state in contrast to the intermediate state which is the less folded state.

According to an embodiment, when the foldable electronic device 2 is viewed in the unfolded state, the display area 250 of the first display module 25 may be provided in a symmetrical shape with respect to the center line A of the foldable electronic device 2. The center line A of the foldable electronic device 2 may correspond to the center of the width of the third display area 253 extending from a first boundary between the first display area 251 and the third display area 253 to a second boundary between the second display area 251 and the third display area 253 when the foldable electronic device 2 is viewed in the unfolded state. The illustrated +x coordinate axis may be substantially perpendicular to the center line A, and the illustrated +y coordinate axis may be substantially parallel to the center line A. In the front surface of the foldable electronic device 2 provided by the first display area 251, the first front surface area provided by the first display area 251 may be substantially parallel to the x-y plane.

According to an embodiment, the third display area 253 disposed in the bent form in the folded state of the foldable electronic device 2 may have a substantially symmetrical shape with respect to the center line A of the foldable electronic device 2.

According to an embodiment, when viewing the foldable electronic device 2 in the unfolded state, the display area 25 of the first display module 25 may have a substantially rectangular shape.

According to an embodiment, the first housing 21 may include a first frame (or, a first frame structure or a first framework) 211, and a first cover 212 disposed on (or coupled) to the first frame 211. The combination of the first frame 211 and the first cover 212 may provide a "first rear surface area" and a "first side surface area" in the exterior of the foldable electronic device 2. The first frame 211 may provide at least a portion of the first side surface area of the foldable electronic device 2. The first cover 212 may provide at least a portion of the first rear surface area of the foldable electronic device 2. The first rear surface area may be oriented in a direction opposite to the first front surface area of the foldable electronic device 2 provided by the first display area 251 of the first display module 25.

According to an embodiment, the first frame 211 may include a first side (also referred to as a first side surface portion, a first side surface member, a first side surface structure, or a first side surface bezel structure) 2112. The first side 2112 may surround at least a portion of the space between the first display area 251 and the first cover 212, and may provide at least a portion of the first side surface area in the exterior of the foldable electronic device 2.

According to an embodiment, the first frame 211 may include a first support portion 2111 extending from or connected to the first side 2112. The first support portion 2111 is a structural element positioned inside the foldable electronic device 2 to correspond to the first housing 21 and may be referred to as various other terms, such as a "first bracket," a "first supporter," a "first support member," or a "first support structure."

According to an embodiment, the first frame 211 may be provided as an integrated or single structure (e.g., a single continuous structure or complete structure) including the first support portion 2111 and the first side 2112.

According to an embodiment, the first support portion 2111 may be at least partially positioned between the first display area 251 and the first cover 212. The first display area 251 may be disposed on the first support portion 2111, and the first support portion 2111 may support the first display area 251.

According to an embodiment, various electrical components (not separately illustrated), such as a printed circuit board or a battery, may be at least partially disposed on the first support portion 2111 of the first frame 211 between the first frame 211 and the first cover 212.

According to an embodiment, the second housing 22 may include a second frame (or a second frame structure or a second framework) 221, and/or a second cover 222 disposed on the second frame 221. The combination of the second frame 221 and the second cover 222 may provide a "second rear surface area" and a "second side surface area" in the exterior of the foldable electronic device 2. The second frame 221 may provide at least a portion of the second side surface area of the foldable electronic device 2. The second cover 222 may provide at least a portion of the second rear surface area of the foldable electronic device 2. The second rear surface area may be oriented in a direction opposite to the second front surface area of the foldable electronic device 2 provided by the second display area 252.

According to an embodiment, the second frame 221 may include a second side (or, as a second side surface portion, a second side surface member, a second side surface structure, or a second side surface bezel structure) 2212. The second side 2212 may surround at least a portion of the space between the second display area 252 and the second cover 222, and may provide at least a portion of the second side surface area in the exterior of the foldable electronic device 2.

According to various embodiments, the second frame 221 may include a second support portion 2211 extending from or connected to the second side 2212. The second support portion 2211 is a structure element positioned inside the foldable electronic device 2 to correspond to the second housing 22 and may be referred to as various other terms, such as a "second bracket," a "second supporter," a "second support member," or a "second support structure."

According to an embodiment, the second frame 221 may be provided as an integrated or single structure (e.g., a single continuous structure or complete structure) including the second support portion 2211 and the second side 2212.

According to an embodiment, the second support portion 2211 may be at least partially positioned between the second display area 252 and the second cover 222. The second display area 252 may be disposed on the second support portion 2211, and the second support portion 2211 may support the second display area 252.

According to an embodiment, various electrical components (not separately illustrated), such as a printed circuit board or a battery, may be at least partially disposed on the second support portion 2211 of the second frame 221 between the second frame 221 and the second cover 222.

According to an embodiment, the first side 2112 of the first frame 211 may include a first edge B1, a second edge B2, a third edge B3, and/or a fourth edge B4. The first edge B1 may extend in a direction perpendicular to the center line A of the foldable electronic device 2. The third edge B3 may be spaced apart from the first edge B1 in the direction of the center line A of the foldable electronic device 2, and may be substantially parallel to the first edge B1. The second edge B2 may interconnect one end of the first edge B1 and one end of the third edge B3. The fourth edge B4 may interconnect the other end of the first edge B1 and the other end of the third edge B3. The second edge B2 and the fourth edge B4 may be substantially parallel to each other. The fourth edge B4 may be positioned closer to the center line A of the foldable electronic device 2 than the second edge B2.

According to an embodiment, a first corner C1 where the first edge B1 and the second edge B2 are connected, and/or a second corner C2 where the second edge B2 and the third edge B3 are connected may be provided (or formed) in a smoothly curved shape.

According to an embodiment, when viewed from above the first cover 212, the first edge B1, the second edge B2, the third edge B3, and the fourth edge B4 may surround the first cover 112.

According to an embodiment, the second side 2212 of the second frame 221 may include a fifth edge B5, a sixth edge B6, a seventh edge B7, and/or an eighth edge B8. The fifth edge B5 may extend in a direction perpendicular to the center line A of the foldable electronic device 2. The seventh edge B7 may be spaced apart from the fifth edge B5 in the direction of the center line A of the foldable electronic device 2, and may be substantially parallel to the fifth edge B5. The sixth edge B6 may interconnect one end of the fifth edge B5 and one end of the seventh edge B7. The eighth edge B8 may interconnect the other end of the fifth edge B5 and the other end of the seventh edge B7. The sixth edge B6 and the eighth edge B8 may be substantially parallel to each other. The eighth edge B8 may be positioned closer to the center line A of the foldable electronic device 2 than the sixth edge B6.

According to an embodiment, a third corner C3 where the fifth edge B5 and the sixth edge B6 are connected, and/or a fourth corner C4 where the sixth edge B6 and the seventh edge B7 are connected may be provided (or formed) in a smoothly curved shape.

According to an embodiment, when viewed from above the second cover 222, the fifth edge B5, the sixth edge B6, the seventh edge B7, and the eighth edge B8 may surround the second cover 222.

According to an embodiment, in the folded state of the foldable electronic device 2, the first side 2112 of the first frame 211 and the second side 2212 of the second frame 221 may be aligned with and overlap each other. In the folded state of the foldable electronic device 2, the first edge B1 and the fifth edge B5 may be aligned with and overlap each other. When the foldable electronic device 2 is in the folded state, the second edge B2 and the sixth edge B6 may be aligned with and overlap each other. When the foldable electronic device 2 is in the folded state, the third edge B3 and the seventh edge B7 may be aligned with and overlap each other.

According to an embodiment, the fourth edge B4 and the eighth edge B8 may be positioned on opposite sides of the third display area 253. When viewed from above the front surface of the foldable electronic device 2 in the unfolded state, the fourth edge B4 and the eighth edge B8 may be invisible. For example, referring to the foldable electronic device 2 in the unfolded state, the surface area provided by the third display area 253, which is arranged to be substantially flat in the exterior of the foldable electronic device 2, may be oriented in the +z-axis direction, and the surface area provided by the fourth edge B4 and the eighth edge B8 in the exterior of the foldable electronic device 2 may be oriented in the -z-axis direction on the opposite side of the surface area provided by the third display area 253.

According to an embodiment, a hinge housing (or a hinge cover) 23 may include one or more hinge modules (e.g., a first hinge module 241, a second hinge module 242, and a third hinge module 243). The one or more hinge modules may connect the first support portion 2111 of the first frame 211 and the second support portion 2211 of the second frame 221.

According to an embodiment, when the foldable electronic device 2 switches from the unfolded state to the folded state, a gap between the first frame 211 and the second frame 221 may open on the opposite side of the third display area 253 due to a change in the relative position between the first frame 211 and the second frame 221 connected to each other via the hinge portion 24 and a change in the state of the hinge portion 24 coupled with the hinge housing 23. The hinge housing 23 may be exposed to the outside through the open gap. In the folded state of the foldable electronic device 2, the hinge housing 23 may be exposed to the outside through an open gap between the fourth edge B4 and the eighth edge B8. The hinge housing 23 may be exposed to a greater extent in the folded state of the foldable electronic device 2 than in the intermediate state of the foldable electronic device 2. In the folded state of the foldable electronic device 2, the hinge housing 23 may be a portion of the exterior that covers the interior of the foldable electronic device 2. In the folded state of the foldable electronic device 2, the side surface of the foldable electronic device 2 may include a first side surface area provided by the first side 2112 of the first frame 211, a second side surface area provided by the first side 2212 of the second frame 221, and a third side surface area provided by the hinge housing 23.

According to an embodiment, when the foldable electronic device 2 switches from the folded state to the unfolded state, the gap between the first frame 211 and the second frame 221 may be closed on the opposite side of the third display area 253 due to a change in the relative position between the first frame 211 and the second frame 221 connected to each other via the hinge portion 24 and a change in the state of the hinge portion 24 coupled with the hinge housing 23. The hinge housing 23 may not be exposed to the outside. In the unfolded state of the foldable electronic device 2, the gap between the fourth edge B4 and the eighth edge B8 may be closed, and the hinge housing 23 may not be exposed to the outside.

According to an embodiment, the first edge B1, the third edge B3, and the fourth edge B4 may be one side bezel (or screen bezel) surrounding one side area of the first display module 25 with respect to the center line A of the foldable electronic device 2. The fifth edge B5, the seventh edge B7, and the eighth edge B8 may be the other side bezel (or screen bezel) surrounding the other side area of the first display module 25 with respect to the center line A of the foldable electronic device 2.

According to an embodiment, the first frame 211 and/or the second frame 221 may be provided as a combination of a conductor (or a metal body) (not separately illustrated) including one or more conductive portions and a non-conductor (or a non-metal body) (not separately illustrated) including one or more non-conductive portions.

According to various embodiments, the first side 2112 of the first frame 211 may include a first side metal (also referred to as a first metal structure, a first side metal structure, a first side conductor, a first side conductive structure, a first outer metal structure, a first outer conductor, a first outer conductive structure, a first side surface metal, a first side surface metal structure, a first side surface conductor, or a first side surface conductive structure) E (see FIG. 5), and a first side non-metal (also referred to as a first side non-metal structure, a first side non-conductor, a first side non-conductive structure, a first outer non-conductor, a first outer non-conductive structure, a first side surface non-metal, a first side surface non-metal structure, a first side surface non-conductor, or a first side surface non-conductive structure) F (see FIG. 5).

According to an embodiment, the first side metal E of the first side 2112 (see FIG. 5) may include a plurality of metals (also referred to as outer metals, outer conductive portions, or side surface conductive portions) E1, E1, E2, E3, E4, E5, E6, and E7. For example, the plurality of metals E1, E2, E3, E4, E5, E6, and E7 may include a first metal E1, a second metal E2, a third metal E3, a fourth metal E4, a fifth metal E5, a sixth metal E6, and a seventh metal E7.

According to an embodiment, the first metal E1 may be positioned between the second metal E2 and the seventh metal E7. The first metal E1 may extend from one end adjacent to the second metal E2 to the other end adjacent to the seventh metal E7. The first metal E1 may provide (or form) a portion of the first edge B1.

According to an embodiment, the second metal E2 may be positioned between the first metal E1 and the third metal E3. The second metal E2 may extend from one end adjacent to the first metal E1 to the other end adjacent to the third metal E3. The second metal E2 may provide (or form) a portion of the first edge B1.

According to an embodiment, the third metal E3 may be positioned between the second metal E2 and the fourth metal E4. The third metal E3 may extend from one end adjacent to the second metal E2 to the other end adjacent to the fourth metal E4. The third metal E2 may provide (or form) a first corner C1, a portion of the first edge B1 extending from the first corner C1, and a portion of the second edge B2 extending from the first corner C1.

According to an embodiment, the fourth metal E4 may be positioned between the third metal E3 and the fifth metal E5. The fourth metal E4 may extend from one end adjacent to the third metal E3 to the other end adjacent to the fifth metal E5. The fourth metal E4 may provide (or form) a portion of the second edge B2.

According to an embodiment, the fifth metal E5 may be positioned between the fourth metal E4 and the sixth metal E6. The fifth metal E5 may extend from one end adjacent to the fourth metal E4 to the other end adjacent to the sixth metal E6. The fifth metal E5 may provide (or form) a second corner C2, a portion of the second edge B2 extending from the first corner C2, and a portion of the third edge B3 extending from the second corner C2.

According to an embodiment, the sixth metal E6 may be positioned between the fifth metal E5 and the seventh metal E7. The sixth metal E6 may extend from one end adjacent to the fifth metal E5 to the other end adjacent to the seventh metal E7. The sixth metal E6 may provide (or form) a portion of the third edge B3.

According to an embodiment, the seventh metal E7 may be positioned between the first metal E1 and the sixth metal E6. The seventh metal E7 may extend from one end adjacent to the first metal E1 to the other end adjacent to the sixth metal E6. The seventh metal E7 may provide (or form) a fourth edge B4, a portion of the first edge B1 extending from one end of the fourth corner B4, and a portion of the third edge B3 extending from the other end of the fourth corner B4.

According to an embodiment, the first side non-metal F of the first side 2112 (see FIG. 5) may include a plurality of non-metals (also referred to as outer non-metals, outer non-conductive portions, or side surface non-conductive portions) F1, F1, F2, F3, F4, F5, F6, and F7. For example, the plurality of non-metals F1, F2, F3, F4, F5, F6, and F7 may include a first non-metal F1, a second non-metal F2, a third non-metal F3, a fourth non-metal F4, a fifth non-metal F5, a sixth non-metal F6, and a seventh non-metal F7.

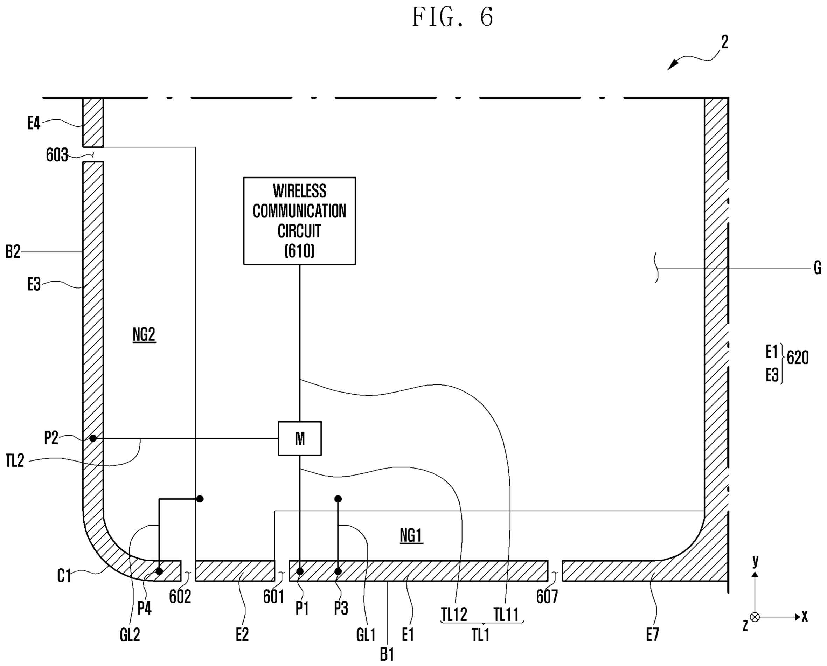

According to an embodiment, the first non-metal F1 (e.g., a first insulation portion) may be disposed in a first segmentation portion (e.g., a first gap) between the first metal E1 and the second metal E2 (e.g., the first segmentation portion 601 of FIG. 6). The first metal E1 and the second metal E2 may be physically separated from each other with the first non-metal E1 interposed therebetween. The first non-metal F1 may provide (or form) a portion of the first edge B1.

According to an embodiment, the second non-metal F2 (e.g., a second insulating portion) may be disposed in a second segmentation portion (e.g., a second gap) (e.g., the second segmentation portion 602 of FIG. 6) between the second metal E2 and the third metal E3. The second metal E2 and the third metal E3 may be physically separated from each other with the second non-metal E2 interposed therebetween. The second non-metal F2 may provide (or form) a portion of the first edge B1.

According to an embodiment, the third non-metal F3 (e.g., a third insulating portion) may be disposed in a third segmentation portion (e.g., a third gap) (e.g., the third segmentation portion 603 of FIG. 6) between the third metal E3 and the fourth metal E4. The third metal E3 and the fourth metal E4 may be physically separated from each other with the third non-metal E3 interposed therebetween. The third non-metal F3 may provide (or form) a portion of the second edge B2.

According to an embodiment, the fourth non-metal F4 (e.g., a fourth insulating portion) may be disposed in a fourth segmentation portion (e.g., a fourth gap) between the fourth metal E4 and the fifth metal E5. The fourth metal E4 and the fifth metal E5 may be physically separated from each other with the fourth non-metal E4 interposed therebetween. The fourth non-metal F4 may provide (or form) a portion of the second edge B2.

According to an embodiment, the fifth non-metal F5 (e.g., a fifth insulating portion) may be disposed in a fifth segmentation portion (e.g., a fifth gap) between the fifth metal E5 and the sixth metal E6. The fifth metal E5 and the sixth metal E6 may be physically separated from each other with the fifth non-metal E5 interposed therebetween. The fifth non-metal F5 may provide (or form) a portion of the third edge B3.

According to an embodiment, the sixth non-metal F6 (e.g., a sixth insulating portion) may be disposed in a sixth segmentation portion (e.g., a sixth gap) between the sixth metal E6 and the seventh metal E7. The sixth metal E6 and the seventh metal E7 may be physically separated from each other with the sixth non-metal E6 interposed therebetween. The sixth non-metal F6 may provide (or form) a portion of the third edge B3.

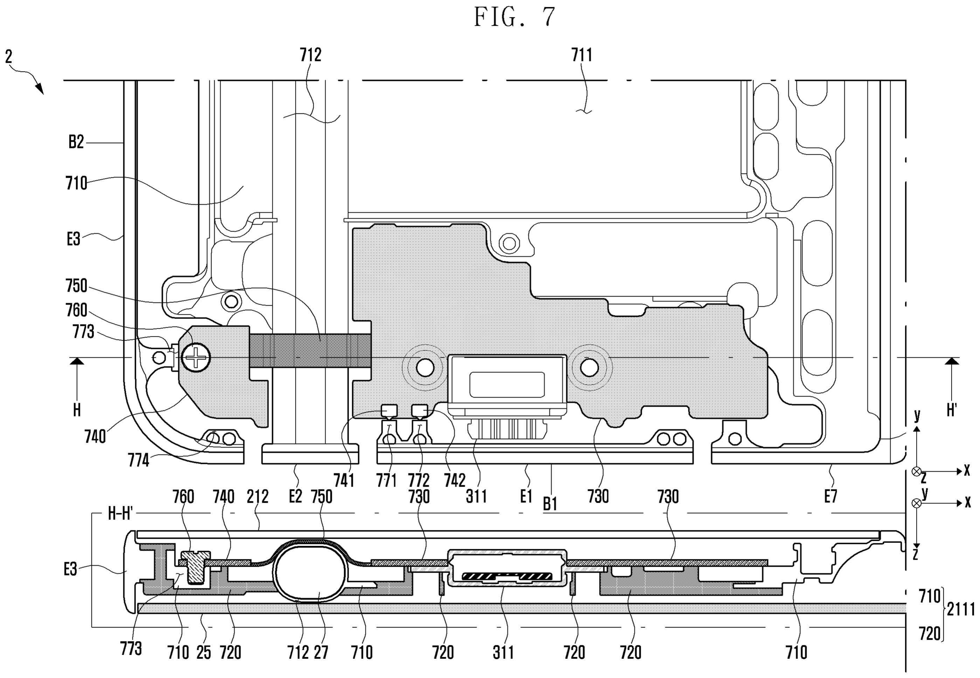

According to an embodiment, the seventh non-metal F7 (e.g., a seventh insulation portion) may be disposed in a seventh segmentation portion (e.g., a seventh gap) (e.g., the seventh segmentation portion 607 of FIG. 7) between the first metal E1 and the second metal E7. The seventh metal E7 and the eighth metal E8 may be physically separated from each other with the seventh non-metal E7 interposed therebetween. The seventh non-metal F7 may provide (or form) a portion of the first edge B1.

According to various embodiments, although not separately illustrated, the number, locations, and/or shapes of metals and/or non-metals included in the first side 2112 are not limited to the illustrated examples and may vary.

According to an embodiment, the first support portion 2111 of the first frame 211 may be provided (or formed) by a combination of a first inner metal (e.g., the first metal 710 of FIG. 7) and a first inner non-metal (e.g., the first inner non-metal 720 of FIG. 7). The first inner metal may include a combination of one or more conductive portions. The first inner non-metal may include a combination of one or more non-conductive portions. Some surface areas of first support portion 2111 may include a conductive surface area provided by the first inner metal, and other partial surface areas of the first support portion 2111 may include a non-conductive surface area provided by the first inner non-metal.

According to an embodiment, the first inner metal (e.g., the first inner metal 710 of FIG. 7) of the first support portion 2111 may be connected to the first side metal E of the first side 2112. For example, the first metal material included in the first inner metal of the first support portion 2111 may be different from the second metal material included in the first side metal E. For example, the first metal material included in the first inner metal may be identical to or different from the second metal material included in the first side metal E.

According to an embodiment, an integrated or single metal (or metal structure) (e.g., a single continuous structure or a complete structure) including the first inner metal of the first support portion 2111 (e.g., the first inner metal 710 of FIG. 7) and the first side metal E of the first side 2112 may be provided (or formed).

According to an embodiment, the first inner non-metal of the first support portion 2111 (e.g., the first inner non-metal 720 of FIG. 7) may be connected to the first side non-metal F of the first side 2112. For example, the first non-metal material included in the first inner non-metal may be the same as or different from the second non-metal material portion included in the first side non-metal F.

According to an embodiment, the integrated or single non-metal (or non-metal structure) (e.g., a single continuous structure or a complete structure) including the first inner non-metal of the first support portion 2111 (e.g., the first inner non-metal 720 of FIG. 7) and the first side non-metal F of the first side 2112 may be provided (or formed).

According to an embodiment, the second side 2212 of the second frame 221 may include a second side metal including a plurality of metals and a second side non-metal including a plurality of non-metals.

According to an embodiment, in the folded state of the foldable electronic device 2, the first side metal included in the first side 2112 of the first frame 211 and the second side metal included in the second side 2212 of the second frame 221 may be aligned and overlapped. For example, in the folded state of the foldable electronic device 2, the plurality of metals E1, E2, E3, E4, E5, E6, and E7 included in the first side 2112 and the plurality of metals included in the second side 2212 may be correspondingly aligned and overlapped. For example, in the folded state of the foldable electronic device 2, the plurality of non-metals F1, F2, F3, F4, F5, F6, and F7 included in the first side 2112 and the plurality of non-metals included in the second side 2212 may be correspondingly aligned and overlapped.

According to an embodiment, the second support portion 2211 of the second frame 221 may be implemented to be at least partially the same as or similar to the first support portion 2111 of the first frame 211. The second support portion 2211 may be provided (or formed) by a combination of a second inner metal (not separately illustrated) and a second inner non-mental (not separately illustrated).

According to an embodiment, the foldable electronic device 2 may include a ground structure (e.g., not illustrated separately). The ground structure may reduce or prevent electromagnetic interference (EMI) to a plurality of electrical elements included in the foldable electronic device 2. The ground structure of the foldable electronic device 2 may reduce or prevent the electromagnetic influence of noise from outside the foldable electronic device 2 on a plurality of electric components included in the foldable electronic device 2. The ground structure of the foldable electronic device 2 may reduce or prevent electromagnetic interference between the electric components included in the foldable electronic device 2. The ground structure of the foldable electronic device 2 may include, for example, a combination of a plurality of conductors electrically and/or physically connected to each other.

According to an embodiment, the ground structure of the foldable electronic device 2 may include a first inner metal (e.g., the first inner metal 710 of FIG. 7) of the first support 2111 and a second inner metal (not separately illustrated) of the second support portion 2211.

According to an embodiment, the ground structure of the foldable electronic device 2 may include at least one ground plane included in at least one printed circuit board (not separately illustrated) disposed on the first support portion 2111. Through at least one flexible conductor (or flexible conductive portion or flexible conductive member) (not illustrated separately) disposed between a first inner metal (e.g., the first inner metal 710 of FIG. 7) of the first support portion 2111 and the at least one printed circuit board (not illustrated separately) disposed on the first support portion 2111, the first inner metal may be electrically connected to the at least one ground plane included in the at least one printed circuit board. The flexible conductor may include, for example, a conductive clip (e.g., a conductive structure including an elastic structure), a pogo-pin, a spring, conductive Poron, conductive sponge, conductive rubber, conductive tape, or a conductive connector.

According to an embodiment, the ground structure of the foldable electronic device 2 may include at least one ground plane included in at least one printed circuit board (not separately illustrated) disposed on the second support portion 2211. Through at least one flexible conductor disposed between a second inner metal (not illustrated separately) of the second support portion 2211 and the at least one printed circuit board (not illustrated separately) disposed on the second support portion 2211, the second inner metal may be electrically connected to the at least one ground plane included in the at least one printed circuit board.

According to an embodiment, the ground structure of the foldable electronic device 2 may include at least a portion of the first side metal E of the first side 2112. For example, a portion of the first side metal E may be physically connected to the first inner metal (e.g., the first inner metal 710 of FIG. 7) of the first support portion 2111. For example, through at least one flexible conductor positioned between the first side metal E and at least one printed circuit board (not separately illustrated) disposed on the first support portion 2111, a portion of the first side metal E may be electrically connected to at least one ground plane included in the at least one printed circuit board.

According to an embodiment, the ground structure of the foldable electronic device 2 may include at least a portion of the second side metal (not separately illustrated) of the second side 2212. For example, a portion of the second side metal may be physically connected to the second inner metal (not separately illustrated) of the second support portion 2211. For example, through at least one flexible conductor positioned between the second side metal and at least one printed circuit board (not separately illustrated) disposed on the second support portion 2211, a portion of the second side metal may be electrically connected to at least one ground plane included in the at least one printed circuit board.

According to an embodiment, the ground structure of the foldable electronic device 2 may include at least one conductive layer (e.g., a metal sheet for electromagnetic shielding such as a copper sheet) (not separately illustrated) included in the first display module 25. For example, through the first conductive member located between the first display module 25 and the first support portion 2111, at least one conductive layer included in the first display module 25 may be electrically connected to the first inner metal (e.g., the first inner metal 710 of FIG. 7) of the first support portion 2111. For example, through the second conductive member positioned between the first display module 25 and the second support portion 2211, at least one conductive layer included in the first display module 25 may be electrically connected to the second inner metal (not illustrated separately) of the second support portion 2211. The first conductive member and/or the second conductive member may include a conductive adhesive material (or a conductive bonding material) or a flexible conductor (also referred to as a flexible conductive portion or a flexible conductive member).

According to an embodiment, the ground structure of the foldable electronic device 2 may include at least one conductive layer (e.g., a metal sheet for electromagnetic shielding such as a copper sheet) (not separately illustrated) included in the second display module 26. For example, through the third conductive member positioned between the second display module 26 and the second support portion 2211, at least one conductive layer included in the second display module 26 may be electrically connected to the second inner metal (not illustrated separately) of the second support portion 2211. The third conductive member may include a conductive adhesive material (or a conductive bonding material) or a flexible conductor (also referred to as a flexible conductive portion or a flexible conductive member).

According to various embodiments, the ground structure of the foldable electronic device 2 may further include various other conductors or metal bodies (not separately illustrated).

According to an embodiment, at least one metal included in the first side 2112 and/or at least one metal included in the second side 2212 may be electrically connected to a wireless communication circuit (e.g., the wireless communication module 192 of FIG. 1) included in the foldable electronic device 2 and may operate as an antenna radiator. At least one metal included in the first side 2112 and/or at least one metal included in the second side 2212 may receive a signal (e.g., an electromagnetic signal, a radio signal, an RF signal, or a radiation current) from a wireless communication circuit and may emit electromagnetic waves.

According to an embodiment, the wireless communication circuit (e.g., the wireless communication module 192 in FIG. 1) of the foldable electronic device 2 may be configured to transmit a signal of at least one selected or predetermined frequency band to the outside of the foldable electronic device 2 through at least one metal included in the first side 2112 and/or the at least one metal included in the second side 2212. The wireless communication circuit may be configured to receive a signal of at least one selected or predetermined frequency band from the outside of the foldable electronic device 2 through at least one metal included in the first side 2112 and/or at least one metal included in the second side 2212.

According to an embodiment, the at least one selected or predetermined frequency band in which the wireless communication circuit (e.g., wireless communication module 192 of FIG. 1) of the foldable electronic device 2 processes the transmitted signal and/or the received signal may include at least one of a low band (LB) (about 600 MHz to about 1 GHz), a middle band (MB) (about 1 GHz to about 2.3 GHz), a high band (HB) (about 2.3 GHz to about 2.7 GHz), or an ultra-high band (UHB) (about 2.7 GHz to about 6 GHz). The selected or predetermined frequency band may include various other frequency bands.

According to an embodiment, in the folded state of the foldable electronic device 2, the plurality of non-metals F1, F2, F3, F4, F5, F6, and F7 included in the first side part 2112 and the plurality of non-metals included in the second side 2212 are respectively correspondingly aligned with each other, which may reduce the degradation of antenna radiation performance when the at least one metal included in the first side 2112 and/or the at least one metal included in the second side 2212 is used as an antenna radiator.

The foldable electronic device 2 may include a first conductive area (not separately illustrated) and a second conductive area (not separately illustrated). The first conductive area and the second conductive area may be electrically connected to each other, or may be electrically and/or physically connected to each other. According to various embodiments of the disclosure, when the first conductive area is configured to substantially radiate electromagnetic waves, the first conductive area of the combination of the first conductive area and the second conductive area may be defined or interpreted as an antenna radiator, and the second conductive area of the combination of the first conductive area and the second conductive area may be defined or interpreted as a ground structure of the foldable electronic device 2 that is distinct from the antenna radiator. According to various embodiments of the disclosure, when the first conductive area is configured to substantially radiate electromagnetic waves, the combination of the first conductive area and the second conductive area may be defined or interpreted as a ground structure of the foldable electronic device 2, and the first conductive area may be defined or interpreted as an antenna radiator implemented through a portion of the ground structure of the foldable electronic device 2. According to various embodiments of the disclosure, when the first conductive area is configured to substantially radiate electromagnetic waves, the second conductive area may be configured as an antenna ground that electromagnetically affects the first conductive area (e.g., an antenna radiator). The antenna ground may contribute to securing antenna radiating performance (also referred to as radio wave transmission/reception performance or communication performance) and/or coverage relative to the antenna radiator. The antenna ground may reduce electromagnetic interference (EMI) or signal loss relative to the antenna radiator.

According to an embodiment, some of ground structures (not illustrated separately) of the foldable electronic device 2 may be configured as antenna radiators. A portion of the ground structure of the foldable electronic device 2 may be electrically connected to a wireless communication circuit (e.g., the wireless communication module 192 of FIG. 1) of the foldable electronic device 2. A portion of the ground structure of the foldable electronic device 2 may receive (or may be fed with) a signal (e.g., an electromagnetic signal, a radio signal, a RF signal, or a radiation current) from the wireless communication circuit and may be operate as an antenna radiator (also referred to as a radiator, a radiating portion, or a resonator). Various conductive portions (also referred to as conductors, conductive areas, or conductive patterns) configured to radiate electromagnetic waves may be defined or interpreted as excluded from the ground structure of the foldable electronic device 2.

According to an embodiment, some of the ground structures (not illustrated separately) of the foldable electronic device 2 may form antenna grounds each of which has an electromagnetic influence on at least one antenna radiator (not illustrated separately).

According to an embodiment, the second display module 26 may be positioned between the second cover 222 and the second support portion 2211 of the second frame 221. The second display module 26 may be disposed on or coupled to the second cover 222 and/or the second support portion 2211. The display area of the second display module 26 may be visually visible through the second cover 222.

According to an embodiment, the pen input device 27 (e.g., a stylus pen) may be provided in the form of a pen extending from one end including a pen tip to the other end. The first frame 211 may include a pen accommodating portion configured to accommodate the pen input device 27. The pen accommodating portion may include a pen hole PH included in a third edge B3 of a first side 2112 and a pen space portion (e.g., the pen space portion 712 of FIG. 7) included in a first support portion 2111. The pen space portion may extend from the pen hole PH in a direction from the first edge B1 toward the third edge B3 (e.g., the +y-axis direction).

According to an embodiment, the pen hole PH may be formed (or located) in the second metal E2.

According to an embodiment, the first camera module 301, the second camera module 302, the third camera module 303, the fourth camera module 304, and/or the fifth camera module 305 may include at least one lens, image sensor, and/or image signal processor (ISP).

According to an embodiment, the first camera module 301, the second camera module 302, and the third camera module 303 may be accommodated in the first housing 21 to correspond to the first cover 212 (or the first rear surface area of the foldable electronic device 1). For example, the first cover 212 may include a first camera hole (or a first light transmission area) corresponding to the first camera module 301, a second camera hole (or a second light transmission area) corresponding to the second camera module 302, and/or a third camera hole (or a third light transmission area) corresponding to the third camera module 303. The positions or number of camera modules accommodated in the first housing 21 to correspond to the first cover 212 may vary without being limited to the illustrated example.

According to an embodiment, the first camera module 301, the second camera module 302, or the third camera module 303 may include a wide-angle camera module, a telephoto camera module, a color camera module, a monochrome camera module, or an IR camera (e.g., a time-of-flight (TOF) camera or a structured light camera module).

According to an embodiment, the first camera module 301, the second camera module 302, and the third camera module 303 may have different properties (e.g., angles of view) or functions.

According to various embodiments, the first camera module 301, the second camera module 302, or the third camera module 303 may provide different angles of view (or lenses with different angles of view). The foldable electronic device 2 may selectively use the angle of view of the first camera module 301, the second camera module 302, or the third camera module 303 based on a user's selection regarding the angle of view.

According to an embodiment, the fourth camera module 304 may be accommodated in the first housing 21 to correspond to the first front surface area of the foldable electronic device 2.

According to an embodiment, the fourth camera module 304 may overlap the first display area 251 of the first display module 25 when viewed from above the first front surface area of the foldable electronic device 2. The fourth camera module 304 may be positioned on the rear surface of the first display area 351 or below the first display area 351. When viewed from the outside of the foldable electronic device 2, the fourth camera module 304 or the position of the fourth camera module 304 may not be substantially visually distinguished (or exposed). The fourth camera module 304 may include, for example, a hidden behind-display camera (e.g., an under-display camera (UDC)). External light may pass through the first display module 25 and reach the fourth camera module 304.

According to various embodiments, the illustrated embodiment may be modified such that the fourth camera module 304 is accommodated in the second housing 12 to correspond to the second front surface area of the foldable electronic device 2. In various embodiments, an additional camera module (not separately illustrated) may be accommodated in the second housing 22 to correspond to the second front surface area of the foldable electronic device 2.

According to an embodiment, the fifth camera module 305 may be accommodated in the second housing 22 to correspond to the second cover 222 (or the second rear surface area of the foldable electronic device 2).

According to an embodiment, the fifth camera module 305 may be positioned in alignment with an opening provided in the second display module 26 or may be at least partially inserted into the opening. External light may pass through the second cover 222 and the opening provided in the second display module 26 and reach the fifth camera module 305. The opening of the second display module 26 aligned with or overlapping the fifth camera module 305 may be a through hole. In various embodiments, the opening in the second display module 26 aligned with or overlapping the fifth camera module 305 may be provided as a notch (not separately illustrated).

According to various embodiments, the fifth camera module 305 may overlap the second display area 26 when viewed from above the second rear surface area of the foldable electronic device 2. The fifth camera module 305 may be positioned on the rear surface of the second display area 26 or below the second display area 26. When viewed from the outside of the foldable electronic device 2, the fifth camera module 305 or the position of the fifth camera module 305 may not be substantially visually distinguished (or exposed). The fifth camera module 305 may include, for example, a hidden behind-display rear camera (e.g., a UDC). External light may pass through the second cover 222 and the second display module 26 and reach the fifth camera module 305.

According to various embodiments, the first camera module 301, the second camera module 302, the third camera module 303, the fourth camera module 304, or the fifth camera module 305 may operate as at least a portion of a sensor module. For example, an IR camera module may operate as at least portion of a sensor module.

According to an embodiment, the light-emitting module 306 may be accommodated in the first housing 21 to correspond to the first cover 212 (or the first rear surface area of the foldable electronic device 2). The first cover 212 may include a flash hole (or a fourth light transmission area) corresponding to the light-emitting module 306. The light-emitting module 306 may include, for example, an LED or a xenon lamp. The light-emitting module 306 may include a light source for the first camera module 301, the second camera module 302, and/or the third camera module 303.

According to various embodiments, the foldable electronic device 2 may further include another light-emitting module (not illustrated separately) accommodated in the foldable housing 20 to correspond to the front surface of the foldable electronic device 2. The light-emitting module may provide, for example, the state information of the foldable electronic device 2 in an optical form. In various embodiments, the light-emitting modules may provide a light source that operates in conjunction with the operation of the fourth camera module 304.

According to an embodiment, the sensor module 307 may be accommodated in the foldable housing 20 to correspond to the front surface of the foldable electronic device 2.

According to an embodiment, the sensor module 307 may include an optical sensor module. The optical sensor module may include, for example, a proximity sensor module or an illuminance sensor module.

According to an embodiment, the sensor module 307 may overlap the first display area 251 of the first display module 25 when viewed from above the first front surface area of the foldable electronic device 2. The sensor module 307 may be positioned on the rear surface of the first display area 251 or below the first display area 251. When viewed from the outside of the foldable electronic device 2, the sensor module 307 or the position of the sensor module 307 may not be substantially visually distinguished (or exposed). External light may pass through the first display module 25 and reach the sensor module 307.

According to various embodiments, the foldable electronic device 2 may further include various other sensor modules (e.g., a biometric sensor modules) (not illustrated separately).

According to an embodiment, the first audio input module may include a first microphone (or a first mic) (not separately illustrated). The second sound input module may include a second microphone (or a second mic) (not illustrated separately). The third sound input module may include a third microphone (or a third mic) (not illustrated separately). The fourth sound input module may include a fourth microphone (or a fourth mic) (not illustrated separately). The first microphone may be accommodated in the first housing 21 to correspond to the first microphone hole H11 included in the first edge B1 of the first side 2112. The second microphone may be accommodated in the first housing 21 to correspond to the second microphone hole H12 included in the third edge B3 of the first side 2112. The third microphone may be accommodated in the first housing 21 to correspond to the third microphone hole H13 included in the third edge B3 of the first side 2112. The fourth microphone may be accommodated in the second housing 22 to correspond to the fourth microphone hole H14 included in the seventh edge B7 of the second side 2212. The positions or numbers of microphones and microphone holes corresponding to the microphones may vary without being limited to the illustrated example.

According to an embodiment, the first sound output module may include a first speaker (not illustrated separately). The second sound output module may include a second speaker (not illustrated separately). The first speaker or the second speaker may be a speaker for multimedia playback or recording playback. The first speaker may be accommodated in the second housing 22 to correspond to the first speaker hole H21 included in the second side 2212. The second speaker may be accommodated in the second housing 22 to correspond to the second speaker hole H21 provided in the second side 2212. The positions or numbers of speakers for multimedia playback or recording playback and speaker holes corresponding to the speakers may vary without being limited to the illustrated example.

According to an embodiment, the third audio output module may include a third speaker (not illustrated separately). The third speaker may include a call receiver. The third speaker may be accommodated in the first housing 21 to correspond to the third speaker hole H23 provided between the second cover 222 and the seventh edge B7 of the second side 2212. The positions or numbers of call speakers and speaker holes corresponding to the speakers may vary without being limited to the illustrated example.

According to an embodiment, the key input module may include a first key (or first side key) 309, a second key (or second side key 310), and/or a key signal generator (not separately illustrated). The first key 309 may be positioned in the first key hole included in the second edge B2 of the first side 2112. The second key 310 may be positioned in the second key hole included in the second edge B2 of the first side 2112. The key signal generator may be configured to generate a first key signal in response to a press or touch on the first key 309 and a second key signal in response to a press or touch on the second key 310. The positions or number of key input modules may vary without being limited to the illustrated example.

According to an embodiment, the first connection terminal 311 (also referred to as a first connector or a first interface terminal) may be accommodated in the first housing 21 to correspond to a first connection terminal hole (e.g., a first connector hole) included in the first edge B1 of the first side 2112. The foldable electronic device 2 may transmit and/or receive power and/or data to/from an external electronic device electrically connected to the first connection terminal 311. The first connection terminal 311 may include, for example, a USB connector or an HDMI connector. The positions of the first connection terminal 31 1 and the first connection terminal hole corresponding to the first connection terminal 311 may vary without being limited to the illustrated example.

According to an embodiment, the second connection terminal 312 (also referred to as a second connector or a second interface terminal) may be accommodated in the second housing 22 to correspond to a second connection terminal hole (e.g., a second connector hole) included in the sixth edge B6 of the second side 2112. An external storage medium such as a secure digital memory (SD) card, a SIM card, or a universal SIM (USIM) may be connected to the second connection terminal 312. The positions of the second connection terminal 312 and the second connection terminal hole corresponding to the second connection terminal 312 may vary without being limited to the illustrated example.

The foldable electronic device 2 may further include various components depending on its provided form. Although all of these components cannot be listed since the components are modified diversely depending on the convergence trend of foldable electronic devices 2, components equivalent to the above-mentioned components may be further included in the foldable electronic device 2. In various embodiments, certain components may be excluded from the above-described components or replaced with other components depending on the provided form of the electronic device.

FIG. 6 is a view illustrating a foldable electronic device 2 according to an embodiment of the disclosure. It is to be understood in the disclosure that all the combinations of features and/or embodiments disclosed with reference to FIG. 6 are conceived and included. That is, all of the combinations of features described below with reference to FIG. 6 are to be considered as being included in the disclosure as specific examples.

Referring to FIG. 6, a foldable electronic device 2 may include a first metal (or first conductive portion) E1, a second metal (or second conductive portion) E2, a third metal (or third conductive portion) E3, a fourth metal E4, a seventh metal E7, a ground area G, a first electrical path TL1, a second electrical path TL2, a third electrical path GL1, a fourth electrical path GL2, a matching circuit M, and/or a wireless communication circuit 610 (e.g., a wireless communication module 192 of FIG. 1).

According to an embodiment, the first metal E1 and the second metal E2 may be physically separated with a first segmentation portion 601 interposed therebetween. The second metal E2 and the third metal E3 may be physically separated with a second segmentation portion 602 interposed therebetween. The third metal E3 and the fourth metal E4 may be physically separated with a third segmentation portion 603 interposed therebetween. The first metal E1 and the seventh metal E7 may be physically separated with a seventh segmentation portion 607 interposed therebetween.

According to an embodiment, the foldable electronic device 2 may include a first non-metal F1 (see FIG. 5), a second non-metal F2 (see FIG. 5), a third non-metal F3 (see FIG. 5), and/or a seventh non-metal F7 (see FIG. 5). The first non-metal F1 may be disposed (e.g., filled) in the first segmentation portion 601. The second non-metal F2 may be disposed (e.g., filled) in the second segmentation portion 602. The third non-metal F3 may be disposed (e.g., filled) in the third segmentation portion 603. The seventh non-metal F7 may be disposed (e.g., filled) in the seventh segmentation portion 607. According to an embodiment, the first non-metal F1, the second non-metal F2, the third non-metal F3, and/or the seventh non-metal F7 may be connected to a first inner non-metal of a first support portion 2111 (see FIG. 4) (e.g., the first inner non-metal 720 of FIG. 7), or may be provided (or formed) integrally with the first inner non-metal.

According to an embodiment, the ground area G may include a portion positioned corresponding to a first housing 21 among ground structures (not separately illustrated) of the foldable electronic device 2.

According to an embodiment, the ground area G may include a combination of at least one ground plane included in at least one printed circuit board (e.g., the first printed circuit board 730 of FIG. 7) disposed in the first support portion 2111 (see FIG. 4), the first inner metal (e.g., the first inner metal 710 of FIG. 7) of the first support portion 2111, and/or at least one other conductor (or conductive area or conductive structure).

According to an embodiment, at least one of the plurality of metals E1, E2, E3, E4, E5, E6, and E7 (see FIG. 5) included in the first side metal E may be electrically and/or physically connected to the ground area G.

According to an embodiment, the second metal E2 may be electrically and/or physically connected to the ground area G. A combination of the second metal E2 and the ground area G may be defined or interpreted as a portion of a ground structure (not separately illustrated) included in the foldable electronic device 2.

According to various embodiments, when the second metal E2 is spaced apart from the ground area G, the second metal E2 may be electrically connected to the ground area G through an electrical path (or ground line) (not separately illustrated). The electrical path may include, for example, a combination of one or more conductive paths (or conductors or conductive structures) (not separately illustrated) between the second metal E2 and the ground area G. A combination of the second metal E2, the ground area G, and the electrical path between the second metal E2 and the ground area G may be defined or interpreted as a portion of the ground structure (not separately illustrated) included in the foldable electronic device 2.

According to various embodiments, the second metal E2 may be defined or interpreted as a portion of the ground area G.

According to an embodiment, at least one of the plurality of metals E1, E2, E3, E4, E5, E6, and E7 (see FIG. 5) included in the first side metal E may be physically separated from the ground area G. For example, the first metal E1, the second metal E2, and/or the third metal E3 may be physically separated from the ground area G.

According to an embodiment, the foldable electronic device 2 may include a first non-ground area NG1 and/or a second non-ground area NG2. For example, the first non-ground area NG1 may refer to a portion which is positioned corresponding to a first edge B1 and by which the ground area G and the first edge B1 are physically spaced apart from each other. For example, the first metal E1 may be physically separated from the ground area G with the first non-ground area NG1 interposed therebetween. For example, the second non-ground area NG2 may refer to a portion which is positioned corresponding to a second edge B2 and by which the ground area G and the second edge B2 are physically spaced apart from each other. For example, the third metal E3 may be physically separated from the ground area G with the second non-ground area NG2 interposed therebetween.

According to an embodiment, a portion of the ground area G may extend between the first non-ground area NG1 and the second non-ground area NG2 and may be electrically and/or physically connected to the second metal E2.

According to an embodiment, a portion of the first inner non-metal (e.g., the first inner non-metal 720 of FIG. 7) included in the first support portion 2111 (see FIG. 4) may be disposed in the first non-ground area NG1 and/or the second non-ground area NG2.

According to an embodiment, the foldable electronic device 2 may include an antenna structure 620 including the first metal E1 (e.g., a first antenna radiator) and the third metal E3 (e.g., a second antenna radiator). The antenna structure 620 may be configured to resonate in at least one frequency band. The wireless communication circuit 610 may be configured to transmit at least one signal of at least one frequency band to the outside of the foldable electronic device 2 through the antenna structure 620 including the first metal E1 and the third metal E3. The wireless communication circuit 610 may be configured to receive at least one signal of at least one frequency band from the outside of the foldable electronic device 2 through the antenna structure 620 including the first metal E1 and the third metal E3.

According to an embodiment, the antenna structure 620 may be configured to resonate in a first frequency band and a second frequency band different from the first frequency band. The wireless communication circuit 610 may be configured to transmit at least one first signal of the first frequency band and at least one second signal of the second frequency band to the outside of the foldable electronic device 2 through the antenna structure 620 including the first metal E1 and the third metal E3. The wireless communication circuit 610 may be configured to receive at least one first signal of the first frequency band and at least one second signal of the second frequency band from the outside of the foldable electronic device 2 through the antenna structure 620 including the first metal E1 and the third metal E3.

According to an embodiment, the first frequency band may include an MB of about 1 GHz to about 2.3 GHz, an HB of about 2.3 GHz to about 2.7 GHz, and/or a UHB of about 2.7 GHz to about 6 GHz. For example, the second frequency band may include an LB of about 600 MHz to about 1 GHz.

According to an embodiment, the first electrical path TL1 may electrically interconnect the first metal E1 and the wireless communication circuit 610. The wireless communication circuit 610 may provide (or feed) at least one signal (e.g., an electromagnetic signal, a wireless signal, an RF signal, or a radiation current) to the antenna structure 620 including the first metal E1 and the third metal E3 through the first electrical path TL1. The first electrical path TL1 may be defined or interpreted as a "first transmission line" or a "first feeding line."

According to an embodiment, the first electrical path TL1 (e.g., the first transmission line) may include a combination (not separately illustrated) of one or more conductive paths (or conductors or conductive structures) between the first metal E1 and the wireless communication circuit 610.

According to an embodiment, the first electrical path TL1 (e.g., the first transmission line) may be electrically connected to a first point (or first portion) P1 of the first metal E1. The first point P1 is a position or portion of the antenna structure 620 including the first metal E1 and the third metal E3, where at least one signal (e.g., an electromagnetic signal, a wireless signal, an RF signal, or a radiation current) is provided (or fed), and may be defined or interpreted as a "first feeding point" or a "first feeding portion." The position of the first point P1 is not limited to the illustrated example and may vary.

According to an embodiment, the second electrical path TL2 may electrically connect the third metal E3 and the first electrical path TL1. The wireless communication circuit 610 may provide (or feed) at least one signal (e.g., an electromagnetic signal, a wireless signal, an RF signal, or a radiation current) to the antenna structure 620 including the first metal E1 and the third metal E3 through the second electrical path TL2. The second electrical path TL2 may be defined or interpreted as a "second transmission line" or a "second feeding line."

According to an embodiment, the second electrical path TL2 (e.g., a second transmission line) may include a combination (not separately illustrated) of one or more conductive paths (or conductors or conductive structures) between the first electrical path TL1 and the third metal E3.

According to an embodiment, the second electrical path TL2 (e.g., the second transmission line) may be electrically connected to a second point (or a second portion) P2 of the third metal E3. The second point P2 is a position of the antenna structure 620 including the first metal E1 and the third metal E3, where at least one signal (e.g., an electromagnetic signal, a wireless signal, an RF signal, or a radiation current) is provided (or fed), and may be defined or interpreted as a "second point" or a "second feeding portion." The position of the second point P2 is not limited to the illustrated example and may vary.

According to an embodiment, the matching circuit M may electrically connect the first electrical path TL1 (e.g., the first transmission line) and the second electrical path TL2 (e.g., the second transmission line).

According to an embodiment, the first electrical path TL1 may include a first partial electrical path (or first partial transmission line) TL11 and a second partial electrical path (or second partial transmission line) TL12. The first partial electrical path TL11 may electrically connect the wireless communication circuit 610 and the matching circuit M. The second partial electrical path TL12 may electrically connect the matching circuit M and the first metal E1. The second electrical path TL2 may electrically connect the third metal E3 and the matching circuit M.

According to an embodiment, the second electrical path TL2 (e.g., the second transmission line) may include a combination (not separately illustrated) of one or more conductive paths (or conductors or conductive structures) between the third metal E3 and the matching circuit M.

According to an embodiment, the first partial electrical path TL11 (e.g., a first partial transmission line) of the first electrical path TL1 may include a single RF port. The wireless communication circuit 610 may provide at least one first signal of a first frequency band and at least one second signal of a second frequency band different from the first frequency band to the single RF port. For example, the wireless communication circuit 610 may provide at least one first signal of the first frequency band and at least one second signal of the second frequency band together or integrally to the single RF port. Providing, by the wireless communication circuit 610, at least one first signal of the first frequency band and at least one second signal of the second frequency band together or integrally to the single RF port may be defined or interpreted as "integrated feeding." As the integrated feeding, for example, the wireless communication circuit 610 may provide at least one first signal of the first frequency band and at least one second signal of the second frequency band to the single RF point with a time difference. As the integrated feeding, for example, the wireless communication circuit 610 may provide at least one first signal of the first frequency band and at least one second signal of the second frequency band to the single RF point substantially simultaneously.

According to an embodiment, during integrated feeding for the first partial electrical path TL11, the matching circuit M may have a function of matching (e.g., impedance matching) or tuning so that the antenna structure 620 including the first metal E1 and the third metal E3 among a combination of the first side metal E (see

FIG. 5) (or the first metal E1, the second metal E2, and the third metal E3), the ground area G, the first non-ground area NG1, and the second non-ground area NG2 smoothly radiates (or transmits/receives) at least one first signal of the first frequency band and at least one second signal of the second frequency band while reducing loss.

According to an embodiment, during integrated feeding for the first partial electrical path TL11, the matching circuit M may have a function of matching (e.g., impedance matching) or tuning so that the antenna structure 620 including the first metal E1 and the third metal E3 among a combination of the first side metal E (see FIG. 5) (or the first metal E1, the second metal E2, and the third metal E3), the ground area G, the first non-ground area NG1, and the second non-ground area NG2 resonates at at least one resonance frequency corresponding to at least one first signal and at least one resonance frequency corresponding to at least one second signal.

According to an embodiment, at least one first signal of the first frequency band and at least one second signal of the second frequency band provided (or input) to the first partial electrical path TL11 of the first electrical path TL1 may be branched (or separated) by the matching circuit M. The matching circuit M may include, for example, a signal branching circuit. When at least one first signal of the first frequency band and at least one second signal of the second frequency band are input to the first partial electrical path TL11, the matching circuit M may be configured such that the at least one first signal is provided (or fed) to the antenna structure 620 including the first metal E1 and the third metal E3 through the second partial electrical path TL12 of the first electrical path TL1. When at least one first signal of the first frequency band and at least one second signal of the second frequency band are input to the first partial electrical path TL11, the matching circuit M may be configured such that the at least one second signal is provided (or fed) to the antenna structure 620 including the first metal E1 and the third metal E3 through the second partial electrical path TL2.

According to an embodiment, the matching circuit M may include an electrical element having a component such as an inductance, a capacitance, or a conductance. For example, the matching circuit M may include various elements such as a lumped element or a passive element.

According to an embodiment, the matching circuit M may be configured to reduce an impedance variation that may occur when at least one second signal is branched from the first electrical path TL1 to the second electrical path TL2. The matching circuit M may include, for example, an impedance matching circuit. To reduce transmission loss when at least one second signal is branched from the first electrical path TL1 to the second electrical path TL2, the matching circuit M may provide (or form) impedance matching between the first electrical path TL1 and the second electrical path TL2.

According to various embodiments, the matching circuit M may shift a resonance frequency of the antenna structure 620 including the first metal E1 and the third metal E3 to a predetermined frequency or by a predetermined amount.

According to an embodiment, the first metal E1 may be electrically connected to the ground area G through the third electrical path GL1. The third electrical path GL1 may be defined or interpreted as a "first grounding line." The third electrical path GL1 may include, for example, a combination (not separately illustrated) of one or more conductive paths (or conductors or conductive structures) between the first metal E1 and the ground area G. A third point (or third portion) P3 on the first metal E1 electrically connected to the third electrical path GL1 of the antenna structure 620 including the first metal E1 and the third metal E3 may be defined or interpreted as a "first grounding point." The positions or number of third electrical paths GL1 and/or third points P3 are not limited to the illustrated example and may vary.

According to an embodiment, the third metal E3 may be electrically connected to the ground area G via the fourth electrical path GL2. The fourth electrical path GL2 may be defined or interpreted as a "second grounding line." The fourth electrical path GL2 may include, for example, a combination (not separately illustrated) of one or more conductive paths (or conductors or conductive structures) between the third metal E3 and the ground area G. A fourth point (or fourth portion) P4 on the third metal E3 electrically connected to the fourth electrical path GL2 of the antenna structure 620 including the first metal E1 and the third metal E3 may be defined or interpreted as a "second grounding point." The positions or number of fourth electrical paths GL2 and/or fourth points P4 are not limited to the illustrated example and may vary.

According to various embodiments, the third electrical path GL1 may be omitted.

According to various embodiments, the fourth electrical path GL2 may be omitted.

According to an embodiment, when at least one first signal of the first frequency band and at least one second signal of the second frequency band are input to the first partial electrical path TL11 of the first electrical path TL1, a plurality of signal paths may be formed among a first feeding point (e.g., the first point P1), a second feeding point (e.g., the second point P2), and at least one grounding point (e.g., the third point P3 and/or the fourth point P4). The antenna structure 620 including the first metal E1 and the third metal E3 may provide (or form) a plurality of electrical lengths (e.g., lengths expressed as ratios of wavelengths) corresponding to the plurality of signal paths. The antenna structure 620 including the first metal E1 and the third metal E3 may have a plurality of resonance frequencies corresponding to the plurality of electrical lengths. For example, the plurality of resonance frequencies may include at least one resonance frequency corresponding to at least one first signal and at least one resonance frequency corresponding to at least one second signal.

According to an embodiment, the ground area G may operate as an antenna ground that has an electromagnetic influence on the antenna structure 620 including the first metal E1 and the third metal E3. The ground area G may contribute to ensuring antenna radiation performance (or radio transmission/reception performance or communication performance) and/or coverage for the antenna structure 620 including the first metal E1 and the third metal E3. The antenna ground may reduce electromagnetic interference (EMI) or signal loss with respect to the antenna structure 620, the first electrical path TL1, the second electrical path TL2, the third electrical path GL1, and/or the fourth electrical path GL2.

According to an embodiment, when the second metal E2 is integrally formed with the ground area G (or the first inner metal 710 of FIG. 7), the second metal E2 may operate as an antenna ground that has an electromagnetic influence on the antenna structure 620 including the first metal E1 and the third metal E3.

According to various embodiments, when the second metal E2 and the ground area G (or the first inner metal 710 of FIG. 7), which are physically spaced apart from each other, are electrically connected via an electrical path (or grounding line) (not separately illustrated), the second metal E2 may operate as an antenna radiator. For example, the second metal E2 may be electromagnetically coupled with the first metal E1 and/or the third metal E3. For example, the antenna structure 620 may be defined or interpreted as further including the second metal E2.

According to various embodiments, the foldable electronic device 2 may further include a matching circuit (not separately illustrated) disposed in the third electrical path GL1 (e.g., the first grounding line) or electrically connected to the third electrical path GL1. In an embodiment, the matching circuit (not illustrated) electrically connected to the third electrical path GL1 may include a switching circuit configured to selectively electrically connect the first metal E1 and the ground area G under control of a processor (e.g., the processor 120 of FIG. 1) or the wireless communication circuit 610.

According to various embodiments, the foldable electronic device 2 may further include a matching circuit (not separately illustrated) disposed in the fourth electrical path GL2 (e.g., the second grounding line) or electrically connected to the fourth electrical path GL2. In an embodiment, the matching circuit (not illustrated) electrically connected to the fourth electrical path GL2 may include a switching circuit configured to selectively electrically connect the first metal E1 and the ground area G under control of a processor (e.g., the processor 120 of FIG. 1) or the wireless communication circuit 610.

FIG. 7 is a view illustrating a portion of a foldable electronic device 2 according to an embodiment of the disclosure, and a cross-section of the foldable electronic device 2 taken along the line H-H'. It is to be understood in the disclosure that all the combinations of features and/or embodiments disclosed with reference to FIG. 7 are conceived and included. That is, all of the combinations of features described below with reference to FIG. 7 are to be considered as being included in the disclosure as specific examples.

Referring to FIG. 7, a foldable electronic device 2 may include a first display module 25, a first metal (or first conductive portion) E1, a second metal (or second conductive portion) E2, a third metal (or third conductive portion) E3, a seventh metal E7, a first support portion 2111, a first cover 212, a first printed circuit board 730, a second printed circuit board 740, a first connection terminal 311, a pen input device 27, an electrical connector (or electrical connection member) 750, and/or a screw 760.

According to an embodiment, the first support portion 2111 may be at least partially positioned between the first display module 25 and the first cover 212.

According to an embodiment, the first support portion 2111 may include a first inner metal 710 and/or a first inner non-metal 720.

According to an embodiment, the first printed circuit board 730 may be disposed on or coupled to the first support portion 2111 by a plurality of screws (not separately illustrated) between the first support portion 2111 and the first cover 212.

According to an embodiment, the first connection terminal (e.g., a first connector) 311 may be disposed on or coupled to the first printed circuit board 730. The first connection terminal 311 may be positioned corresponding to a first connection terminal hole (or first connector hole) (not separately illustrated) included in the first metal E1.

According to an embodiment, the second printed circuit board 740 may be disposed on or coupled to the first support portion 2111 by the screw 760 between the first support portion 2111 and the first cover 212. The first printed circuit board 730 and the second printed circuit board 740 may be spaced apart from each other.

According to an embodiment, the first support portion 2111 may include a first support area, a second support area, and/or a third support area 711. The first printed circuit board 730 may be disposed on or coupled to the first support area. The second printed circuit board 740 may be disposed on or coupled to the second support area. The first support area and/or the second support area may be provided (or formed) by, for example, a combination of the first inner metal 710 and the first inner non-metal 720. For example, a battery (not separately illustrated) may be disposed on the third support area 711. The third support area may be included in, for example, the first inner metal 710 of the first support portion 2111. According to various embodiments, the third support area 711 may be provided (or formed) by a combination of the first inner metal 710 and the first inner non-metal 720. The first support area and the second support area may be positioned closer to a first edge B1 than the third support area 711 when viewed from above the first cover 212 (e.g., when viewed in the +z-axis direction). The second support area may be positioned closer to a second edge B2 (see FIG. 5) than the first support area when viewed from above the first cover 212.

According to an embodiment, the first metal E1 may be electrically connected to the first printed circuit board 730.

According to an embodiment, the foldable electronic device 2 may include a first flexible conductor (or first flexible conductive portion or first flexible conductive member) 741 and/or a second flexible conductor (or second flexible conductive portion or second flexible conductive member) 742 disposed on the first printed circuit board 730. The first flexible conductor 741 and the second flexible conductor 742 may be in elastic contact with the first metal E1. The first metal E1 may be electrically connected to the first printed circuit board 730 via the first flexible conductor 741 and the second flexible conductor 742. For example, the first flexible conductor 741 and/or the second flexible conductor 742 may be a conductive clip (e.g., a conductive structure including an elastic structure), but are not limited thereto. Although not separately illustrated, the first flexible conductor 741 and/or the second flexible conductor 742 may take various forms such as a pogo pin, a spring, a conductive foam, a conductive rubber, a conductive tape, or a conductive connector.

According to an embodiment, the first metal E1 may be electrically connected to the wireless communication circuit 610 (see FIG. 6) via one flexible conductor (e.g., the first flexible conductor 741) among the first flexible conductor 741 and the second flexible conductor 742. The first metal E1 may be electrically connected to the ground area G (see FIG. 6) via the other flexible connector (e.g., the second flexible conductor 742) among the first flexible conductor 741 and the second flexible conductor 742. For example, one flexible conductor (e.g., the first flexible conductor 741) electrically connecting the first metal E1 and the wireless communication circuit 610 (see FIG. 6) may be included in the second partial electrical path TL12 (e.g., the second partial transmission line) of FIG. 6. For example, the other flexible conductor (e.g., the second flexible conductor 742) electrically connecting the first metal E1 and the ground area G (see FIG. 6) may be included in the third electrical path GL1 (e.g., the first grounding line) of FIG. 6.

According to an embodiment, at least one ground plane (not separately illustrated) included in the first printed circuit board 730 and the first inner metal 710 of the first support portion 2111 may be included in the ground area G of FIG. 6. For example, the ground area G of FIG. 6 may further include at least one other conductor (or conductive area) electrically connected to at least one ground plane included in the first printed circuit board 730 or the first inner metal 710 of the first support portion 2111.

According to an embodiment, the first metal E1 may include a first protrusion 771 and a second protrusion 772. The first protrusion 771 may be in physical contact with the first flexible conductor 741. The second protrusion 772 may be in physical contact with the second flexible conductor 742. For example, one of the first protrusion 771 and the second protrusion 772 may include the first point P1 (e.g., the first feeding point) of FIG. 6, and the other protrusion may include the third point P3 (e.g., the first grounding point) of FIG. 6.

According to an embodiment, the foldable electronic device 2 may include a third printed circuit board (not separately illustrated) disposed on or coupled to the first support portion 2111. For example, when viewed from above the first cover 212 (e.g., when viewed in the +z-axis direction), the third printed circuit board may be at least partially disposed between a battery (not separately illustrated) disposed in the third support area 711 of the first support portion 2111 and the third edge B3 (see FIG. 5). The third printed circuit board may be electrically connected to the first printed circuit board 730 via a flexible printed circuit board (not separately illustrated). For example, a plurality of electrical elements (or functional elements) such as a processor (e.g., the processor 120 of FIG. 1) and/or the wireless communication circuit 610 (see FIG. 6) may be disposed on the third printed circuit board. Referring to FIG. 2, for example, a plurality of electrical elements (or functional elements), such as the first camera module 301, the second camera module 302, the third camera module 303, the fourth camera module 304, the light-emitting module 306, the first sensor module 307, and/or the key input module including the first key 309 and the second key 310, may be disposed on the third printed circuit board. According to various embodiments, an integrated or single printed circuit board replacing the first printed circuit board 730 and the third printed circuit board may be provided (or formed).

According to various embodiments, the wireless communication circuit 610 (see FIG. 6) may be disposed on the first printed circuit board 730.

According to an embodiment, the first support portion 2111 may include a pen space portion 712 configured to accommodate the pen input device 27. The pen space portion 712 may include a support structure having a space into which the pen input device 27 may be inserted. The pen space portion 712 may extend from, or may be connected to, the second metal E2 including the pen hole PH (see FIG. 2) in a direction from the first edge B1 toward the third edge B3 (see FIG. 5) (e.g., in the +y-axis direction). For example, the pen space portion 712 may be included in the first inner metal 710 of the first support portion 2111. According to various embodiments, the pen space portion 712 may be provided (or formed) by a combination of the first inner metal 710 and the first inner non-metal 720 of the first support portion 2111.

According to an embodiment, when viewed from above the first cover 212 (e.g., when viewed in the +z-axis direction), the pen space portion 712 of the first support portion 2111 may be positioned between the first printed circuit board 730 and the second printed circuit board 740.

According to an embodiment, the electrical connector 750 may electrically connect the first printed circuit board 730 and the second printed circuit board 740.

According to an embodiment, the electrical connector 750 may overlap the pen space portion 712 of the first support portion 2111 when viewed from above the first cover 212 (e.g., when viewed in the +z-axis direction). The electrical connector 750 may extend across the pen space portion 712 of the first support portion 2111. For example, the electrical connector 750 may have flexibility to be bent and disposed corresponding to the pen space portion 712. The electrical connector 750 may include, for example, an FPCB, but is not limited thereto.

According to various embodiments, an integrated or single rigid-flexible printed circuit board (RFPCB) replacing the first printed circuit board 730 and the electrical connector 750 may be provided.

According to various embodiments, an integrated or single rigid-flexible printed circuit board replacing the second printed circuit board 740 and the electrical connector 750 may be provided.

According to various embodiments, an integrated or single rigid-flexible printed circuit board replacing the first printed circuit board 730, the second printed circuit board 740, and the electrical connector 750 may be provided.

According to an embodiment, the second printed circuit board 740 may be electrically connected to the third metal E3.

According to an embodiment, the third metal E3 may include a third protrusion 773. The third protrusion 773 may extend between the second printed circuit board 740 and the first support portion 2111. The third protrusion 773 may include a screw fastening portion (e.g., a boss) corresponding to the screw 760 that couples the second printed circuit board 740 and the first support portion 2111. For example, the screw fastening portion may include a female thread corresponding to a male thread of the screw 760. The third protrusion 773 may be electrically connected to the second printed circuit board 740 via the screw 760. For example, the third protrusion 773 may include the second point P2 (e.g., the second feeding point) of FIG. 6. The screw 760, a wire of the second printed circuit board 740 between the screw 760 and the electrical connector 750, and a first conductive path (not separately illustrated) of the electrical connector 750 electrically connecting the first printed circuit board 730 and the second printed circuit board 740 may be included in the second electrical path TL2 (e.g., the second transmission line) of FIG. 6.

According to various embodiments, although not separately illustrated, in substantially the same manner as the structure in which the first printed circuit board 730 and the first metal E1 are electrically connected via a flexible conductor (e.g., the first flexible conductor 741 or the second flexible conductor 742), the third protrusion 773 may be electrically connected to the second printed circuit board 740.

According to an embodiment, the third metal E3 may include a fourth protrusion 774. In substantially the same manner as the structure in which the first printed circuit board 730 and the first metal E1 are electrically connected via a flexible conductor (e.g., the first flexible conductor 741 or the second flexible conductor 742), the fourth protrusion 774 may be electrically connected to the second printed circuit board 740 via a flexible conductor (not separately illustrated) disposed on the second printed circuit board 740. According to various embodiments, in substantially the same manner as the structure in which the second printed circuit board 740 and the third protrusion 773 are electrically connected via the screw 760 (not separately illustrated), the fourth protrusion 774 may be electrically connected to the second printed circuit board 740. The fourth protrusion 774 may include the fourth point P4 (e.g., the second grounding point) of FIG. 6. For example, a wire of the second printed circuit board 740 between the fourth protrusion 774 and the electrical connector 750, and a second conductive path (not separately illustrated) of the electrical connector 750 electrically connecting the first printed circuit board 730 and the second printed circuit board 740 may be included in the fourth electrical path GL2 (e.g., the second grounding line) of FIG. 6.

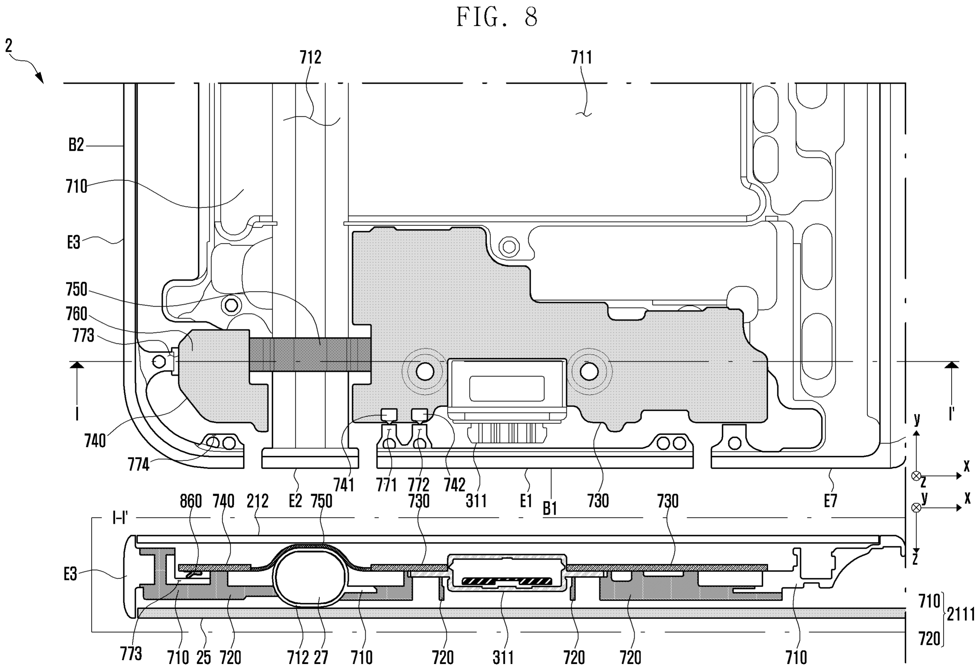

FIG. 8 is a view illustrating a portion of a foldable electronic device 2 according to an embodiment of the disclosure, and a cross-section of the foldable electronic device 2 taken along the line I-I'. It is to be understood in the disclosure that all the combinations of features and/or embodiments disclosed with reference to FIG. 8 are conceived and included. That is, all of the combinations of features described below with reference to FIG. 8 are to be considered as being included in the disclosure as specific examples.

Referring to FIG. 8, a foldable electronic device 2 may include a first display module 25, a first metal E1, a second metal E2, a third metal E3, a seventh metal E7, a first support portion 2111, a first cover 212, a first printed circuit board 730, a second printed circuit board 740, a first connection terminal 311, a pen input device 27, an electrical connector (or electrical connecting member) 750, and/or a third flexible conductor 860. Descriptions of some components of FIG. 8 that are indicated by the same reference numerals as those illustrated in FIG. 7 will be omitted.

According to an embodiment, the third flexible conductor 860 may be positioned between the third protrusion 773 of the third metal E3 and the second printed circuit board 740. The third protrusion 773 may be electrically connected to the second printed circuit board 740 via the third flexible conductor 860. For example, the third flexible conductor 860 may be a conductive clip (e.g., a conductive structure including an elastic structure), but are not limited thereto. Although not separately illustrated, the first flexible conductor 860 may take various forms such as a pogo pin, a spring, a conductive foam, a conductive rubber, a conductive tape, or a conductive connector.

Due to the structure in which the first metal E1 (e.g., a first antenna radiator) and the third metal E3 (e.g., a second antenna radiator) are spaced apart from each other with the second metal E2 interposed therebetween, and due to the pen accommodating portion including the pen hole PH (see FIG. 2) of the second metal E2 and the pen space portion 712 of the first support portion 2111, expanding the first printed circuit board 730 to electrically connect the third metal E3 to the first printed circuit board 730 in the same manner as the electrical connection between the first metal E1 and the first printed circuit board 730 may be restricted. According to an embodiment of the disclosure, the electrical connection method between the third metal E3 and the first printed circuit board 730 according to FIG. 7 or FIG. 8 may reduce or overcome such restrictions and may facilitate securing the antenna structure 620 (see FIG. 6) including the first metal E1 and the third metal E3.

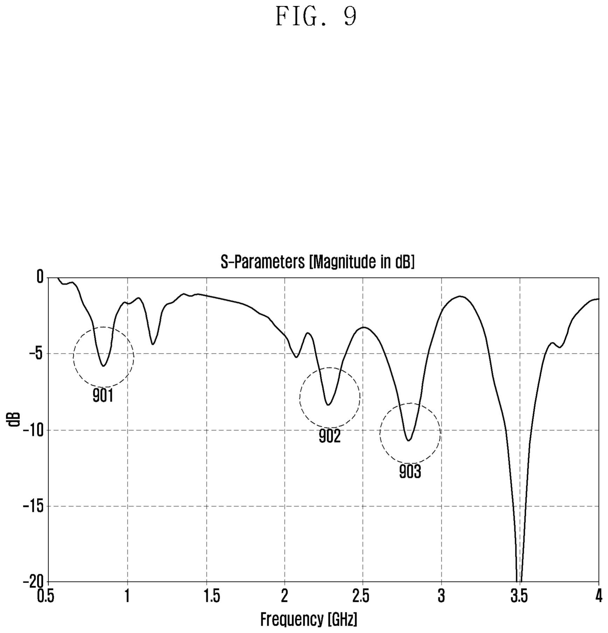

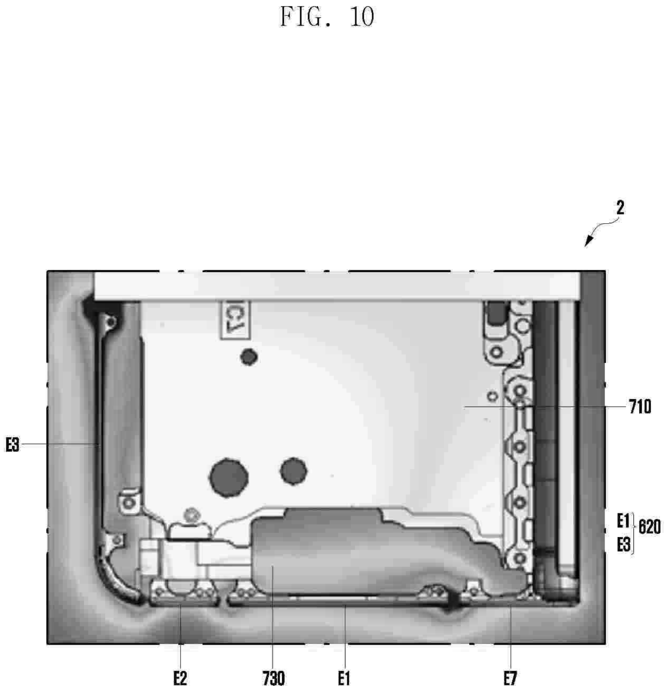

FIG. 9 is a view illustrating a graph showing resonance characteristics (e.g., an S-parameter) of the foldable electronic device 2 of FIG. 6 according to an embodiment of the disclosure. FIG. 10 is a view illustrating an electric field distribution of the foldable electronic device 2 according to an embodiment of the disclosure.

Referring to FIG. 9, the foldable electronic device 2 of FIG. 6 according to an embodiment of the disclosure may provide (or form) a plurality of resonance frequencies. For example, the foldable electronic device 2 of FIG. 6 according to an embodiment of the disclosure may have a first resonance frequency (see reference numeral 901) included in an LB of about 600 MHz to about 1 GHz, a second resonance frequency (see reference numeral 902) included in an MB of about 1 GHz to about 2.3 GHz, and/or a third resonance frequency included in an HB of about 2.3 GHz to about 2.7 GHz.

Referring to FIG. 10, the foldable electronic device 2 according to an embodiment of the disclosure may provide (or form) an electric field distribution capable of radiating an electromagnetic wave of a resonance frequency (e.g., about 800 MHz) included in the LB through the antenna structure 620 including the first metal E1 (e.g., a first antenna radiator) and the third metal E3 (e.g., a second antenna radiator).

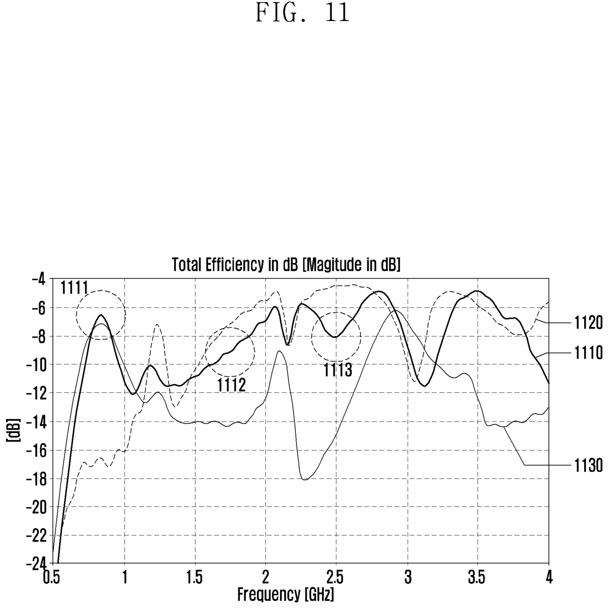

FIG. 11 is a view illustrating graphs showing antenna radiation efficiencies of the foldable electronic device 2 of FIG. 6 according to an embodiment of the disclosure, a foldable electronic device of a first comparative example, and a foldable electronic device of a second comparative example.

The foldable electronic device 2 of FIG. 6 according to an embodiment of the disclosure may include the antenna structure 620 including the first metal E1 and the third metal E3. The foldable electronic device of the first comparative example may include, for example, the first metal E1 as an antenna radiator. The foldable electronic device of the second comparative example may include, for example, the third metal E3 as an antenna radiator.

Referring to FIG. 11, graph 1110 illustrates the antenna radiation efficiency of the foldable electronic device 2 of FIG. 6 according to an embodiment of the disclosure. Graph 1120 illustrates the antenna radiation efficiency of the foldable electronic device of the first comparative example. Graph 1130 illustrates the antenna radiation efficiency of the foldable electronic device of the second comparative example. The foldable electronic device of the first comparative example utilizing the first metal E1 as an antenna radiator may secure antenna radiation performance in, for example, the MB and/or HB. The foldable electronic device of the second comparative example utilizing the third metal E2 as an antenna radiator may secure antenna radiation performance in, for example, the LB. The foldable electronic device 2 of FIG. 6 according to an embodiment of the disclosure may secure antenna radiation performance in the LB, MB, and HB compared to the foldable electronic device of the first comparative example and the foldable electronic device of the second comparative example (see reference numerals "1111," "1112," and "1113").

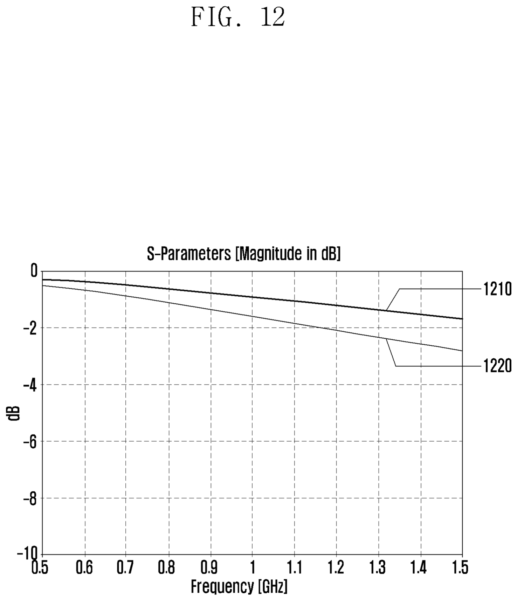

FIG. 12 is a view illustrating graphs showing transmission losses in the foldable electronic device 2 of FIG. 6 according to an embodiment of the disclosure and in a foldable electronic device of a third comparative example.

The foldable electronic device of the third comparative example may not include, for example, the matching circuit M of FIG. 6, compared to the foldable electronic device 2 of FIG. 6 according to an embodiment of the disclosure.

Referring to FIG. 12, graph 1210 illustrates transmission loss of the second electrical path TL2 (e.g., the second transmission line) in the foldable electronic device 2 of FIG. 6 according to an embodiment of the disclosure. Graph 1220 illustrates transmission loss of the second electrical path TL2 in the foldable electronic device 2 of the third comparative example. The foldable electronic device 2 of FIG. 6 according to an embodiment of the disclosure may reduce transmission loss of the second electrical path TL2 through the matching circuit M of FIG. 6, compared to the foldable electronic device of the third comparative example.

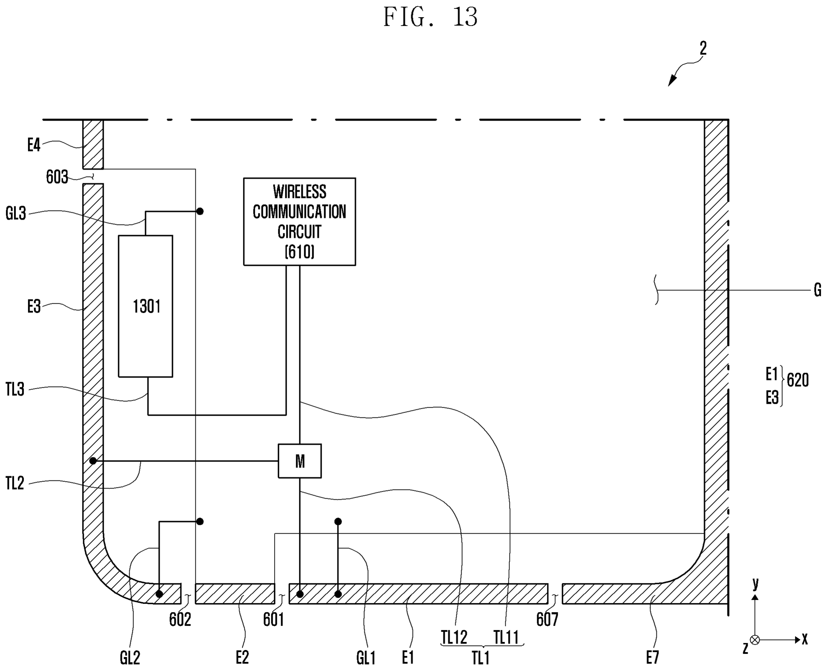

FIG. 13 is a view illustrating a foldable electronic device 2 according to an embodiment of the disclosure. It is to be understood in the disclosure that all the combinations of features and/or embodiments disclosed with reference to FIG. 13 are conceived and included. That is, all of the combinations of features described below with reference to FIG. 13 are to be considered as being included in the disclosure as specific examples.

Referring to FIG. 13, the foldable electronic device 2 may include a first metal (or first conductive portion) E1, a second metal (or second conductive portion) E2, a third metal (or third conductive portion) E3, a fourth metal E4, a seventh metal E7, a conductive pattern 1301, a ground area G, a first electrical path TL1, a second electrical path TL2, a third electrical path GL1, a fourth electrical path GL2, a fifth electrical path TL3, a sixth electrical path GL3, a matching circuit M, and/or a wireless communication circuit 610 (e.g., the wireless communication module 192 of FIG. 1). Descriptions of some components that have the same reference numerals as those illustrated in FIGS. 6 and 7 will be omitted.

According to various embodiments, the foldable electronic device 2 of FIG. 13 may include at least some of the plurality of components disclosed in FIG. 7, or at least some of the plurality of components disclosed in FIG. 8. The plurality of components (e.g., the first metal E1, the second metal E2, the third metal E3, the ground area G, the first electrical path TL1, the second electrical path TL2, the third electrical path GL1, the fourth electrical path GL2, the matching circuit M, and the wireless communication circuit 610) included in the foldable electronic device 2 of FIG. 13 and the electrical connection structure among the plurality of components may be implemented by applying and/or modifying at least a part of the embodiment of FIG. 7 or FIG. 8.

According to an embodiment, the foldable electronic device 2 may include an antenna structure 620 including a combination of the first metal E1 (e.g., a first antenna radiator) and the third metal E3 (e.g., a second antenna radiator), and another antenna radiator (e.g., a third antenna radiator) including a conductive pattern 1301. For example, the foldable electronic device 2 may be configured to resonate in a first frequency band and a second frequency band different from the first frequency band through the antenna structure 620 including the first metal E1 and the third metal E3, and to resonate in a third frequency band different from the first and second frequency bands through the other antenna radiator including the conductive pattern 1301. The wireless communication circuit 610 may be configured to transmit and/or receive at least one first signal of the first frequency band and at least one second signal of the second frequency band through the antenna structure 620 including the first metal E1 and the third metal E3, and to transmit and/or receive at least one third signal of the third frequency band through the other antenna radiator including the conductive pattern 1301.

According to an embodiment, the conductive pattern 1301 may be electrically connected to the wireless communication circuit 610 via a fifth electrical path TL3. For example, the fifth electrical path TL3 may be defined or interpreted as a "third transmission line" or a "third feeding line," and a position or portion of the conductive pattern 1301 connected to the fifth electrical path TL3 may be defined or interpreted as a "third feeding point" or a "third feeding portion."

According to an embodiment, the conductive pattern 1301 may be electrically connected to the ground area G via a sixth electrical path GL3. The sixth electrical path GL3 may be defined or interpreted as a "third grounding line," and a position or portion of the conductive pattern 1301 connected to the sixth electrical path GL3 may be defined or interpreted as a "third grounding point."

According to an embodiment, when at least one third signal (e.g., a third electromagnetic signal, a third wireless signal, a third RF signal, or a third radiation current) of a third frequency band is provided (or fed) to the third feeding point of the conductive pattern 1301, a signal path may be formed between the third feeding point and the third grounding point of the conductive pattern 1301. At least a portion of the conductive pattern 1301 may form an electrical length corresponding to the signal path and may operate as a third antenna radiator having a resonant frequency corresponding to the electrical length. Although not separately illustrated, the positions or numbers of fifth electrical paths TL3 and/or third feeding points are not limited to the illustrated example and may vary. Although not separately illustrated, the positions or numbers of sixth electrical paths GL3 and/or third grounding points is not limited to the illustrated example and may vary.

According to an embodiment, the wireless communication circuit 610 may provide at least one first signal of a first frequency band (e.g., MB and/or HB) and at least one second signal of a second frequency band (e.g., LB) different from the first frequency band to the first partial electrical path TL11 of the first electrical path TL1. The antenna radiator including the first metal E1 and the third metal E3 may radiate at least one first signal of the first frequency band and at least one second signal of the second frequency band. The wireless communication circuit 610 may provide at least one third signal of a third frequency band, which is different from the first frequency band and the second frequency band, to the fifth electrical path TL3. The conductive pattern 1301 (e.g., a third antenna radiator) may radiate at least one third signal of the third frequency band.

According to various embodiments, the wireless communication circuit 610 may include a first wireless communication circuit (or a first wireless communication module) (not separately illustrated) electrically connected to the first electrical path TL1, and a second wireless communication circuit (or a second wireless communication module) (not separately illustrated) electrically connected to the fifth electrical path TL3. The first wireless communication circuit may be configured to transmit and/or receive at least one first signal of the first frequency band and at least one second signal of the second frequency band through the antenna radiator including the first metal E1 and the third metal E3. The second wireless communication circuit may be configured to transmit and/or receive at least one third signal of the third frequency band through the conductive pattern 1301.

According to an embodiment, the conductive pattern 1301 may be formed through laser direct structuring (LDS). For example, the foldable electronic device 2 may include a non-conductive support (or a non-conductive support member or a non-conductive support structure) (not separately illustrated) accommodated in the first housing 21 (see FIG. 2), and the conductive pattern 1301 may be disposed on the non-conductive support through LDS.

According to various embodiments, at least a portion of the conductive pattern 1301 may be disposed on or coupled to the first inner non-metal 720 of FIG. 7.

According to various embodiments, the conductive pattern 1301 may be implemented as an FPCB (not separately illustrated).

According to various embodiments, although not separately illustrated, the conductive pattern 1301 may be disposed on a printed circuit board. For example, the printed circuit board on which the conductive pattern 1301 is disposed may be the second printed circuit board 740 of FIG. 7 or FIG. 8, or an extension of the second printed circuit board 740. The conductive pattern 1301 may be implemented in various other ways.

According to various embodiments, at least a portion of the second electrical path TL2 and at least a portion of the fifth electrical path TL3 may be included in an integrated or single electrical connector (e.g., the electrical connector 750 of FIG. 7).

According to various embodiments, at least a portion of the second electrical path TL2, at least a portion of the fifth electrical path TL3, and at least a portion of the sixth electrical path GL3 may be included in an integrated or single electrical connector (e.g., the electrical connector 750 of FIG. 7).

According to various embodiments, the fifth electrical path TL3 and/or the sixth electrical path GL3 may be included in an electrical connector (not separately illustrated) different from the electrical connector (e.g., the electrical connector 750 of FIG. 7) including the second electrical path TL2.

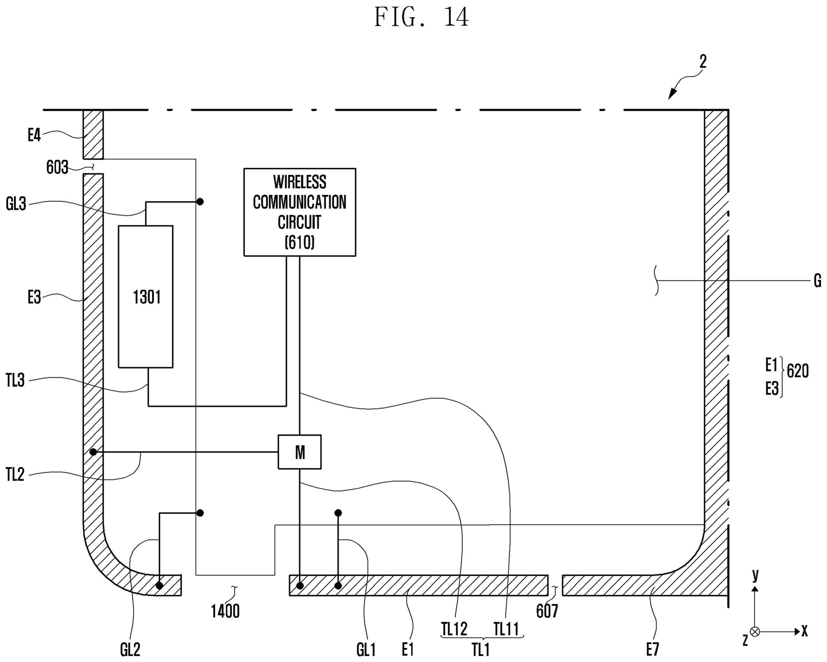

FIG. 14 is a view illustrating a foldable electronic device 2 according to an embodiment of the disclosure. It is to be understood that the disclosure conceives and includes all of the combinations of features and/or embodiments disclosed with reference to FIG. 14. That is, all of the combinations of features described below with reference to FIG. 14 are to be considered as being included in the disclosure as specific examples.

Referring to FIG. 14, the foldable electronic device 2 may include a first metal (or first conductive portion) E1, a third metal (or third conductive portion) E3, a fourth metal E4, a seventh metal E7, a conductive pattern 1301, a ground area G, a first electrical path TL1, a second electrical path TL2, a third electrical path GL1, a fourth electrical path GL2, a fifth electrical path TL3, a sixth electrical path GL3, a matching circuit M, and/or a wireless communication circuit 610 (e.g., the wireless communication module 192 of FIG. 1). Descriptions of some components that are indicated by the same reference numerals as those illustrated in FIG. 13 will be omitted.

According to various embodiments, the foldable electronic device 2 of FIG. 14 may include at least some of the plurality of components disclosed in FIG. 7, or at least some of the plurality of components disclosed in FIG. 8. The plurality of components (e.g., the first metal E1, the third metal E3, the ground area G, the first electrical path TL1, the second electrical path TL2, the third electrical path GL1, the fourth electrical path GL2, the matching circuit M, and the wireless communication circuit 610) included in the foldable electronic device 2 of FIG. 14 and the electrical connection structure among the plurality of components may be implemented by applying and/or modifying at least a part of the embodiment of FIG. 7 or FIG. 8.

According to an embodiment, the foldable electronic device 2 of FIG. 14 may be implemented by omitting the second metal E2 compared to the foldable electronic device 2 of FIG. 13. The foldable electronic device 2 of FIG. 14 may include an eighth segmentation portion (e.g., an eighth gap) 1400 between the first metal E1 and the third metal E3 in place of the first segmentation portion 601, the second segmentation portion 602, and the second metal E2 of FIG. 13.

According to an embodiment, the width of the eighth segmentation portion 1400 (e.g., the width of the gap between the first metal E1 and the third metal E3) may be greater than the width of another segmentation portion (e.g., the third segmentation portion 603 or the seventh segmentation portion 607 of FIG. 14) included in the first side 2112 (see FIG. 5).

According to an embodiment, the first side 2112 (see FIG. 5) of the foldable electronic device 2 may include an eighth non-metal (not separately illustrated) disposed (e.g., filled) in the eighth segmentation portion 1400. The eighth non-metal may replace the first non-metal F1 of FIG. 5, the second non-metal F2 of FIG. 5, and the second metal E2. The eighth non-metal may, for example, be connected to the first inner non-metal (e.g., the first inner non-metal 720 of FIG. 7) of the first support portion 2111 (see FIG. 4) or may be provided (or formed) integrally with the first inner non-metal.

According to an embodiment, the second side 2212 (see FIG. 4) of the second frame 221 may include a second side metal including multiple metals and a second side non-metal including multiple non-metals. In a folded state of the foldable electronic device 2, the multiple metals (E1, E3, E4, E5, E6, and E7) and the multiple non-metals (1400, F3, F4, F5, F6, and F7) included in the first side 2112 (see FIG. 4) may be implemented to be respectively and correspondingly aligned and overlap a plurality of metals and a plurality of non-metals included in the second side 2212.

According to an embodiment, the pen hole PH (see FIG. 2) may be provided (or formed) in the eighth non-metal (not separately illustrated) disposed in the eighth segmentation portion 1400.

According to various embodiments, the eighth segmentation portion 1400 provided (or formed) between the first metal E1 and the third metal E3 in place of the first segmentation portion 601, the second segmentation portion 602, and the second metal E2, and the eighth non-metal (not separately illustrated) disposed in the eighth segmentation portion 1400 may be applied to the example foldable electronic device 2 of FIG. 6, FIG. 7, or FIG. 8.

According to various embodiments, the technical features of the disclosure may also be applied to a structure at least partially identical or similar to a structure including the first metal E1 and the third metal E3 spaced apart from each other with the second metal E2 interposed therebetween in FIG. 6, FIG. 7, FIG. 8, or FIG. 13, and the pen accommodating portion including the pen hole PH of the second metal E2 (see FIG. 2) and the pen space portion 712 of the first support portion 2111.

According to various embodiments, the technical features of the disclosure may also be applied to a structure at least partially identical or similar to a structure including the first metal E1 and the third metal E3 spaced apart from each other with the eighth segmentation portion 1400 interposed therebetween in FIG. 14, and the pen accommodating portion including the pen hole PH (see FIG. 2) formed in the eighth non-metal (not separately illustrated) disposed in the eighth segmentation portion 1400 and the pen space portion 712 of the first support portion 2111.

The technical features of the disclosure may be applied to example electronic devices of different external appearances, not limited to the foldable electronic device 2 (e.g., a bar-type or plate-type electronic device, a slidable electronic device, a stretchable electronic device, or a rollable electronic device).

The example electronic devices may be obtained by changing or modifying at least some of the plurality of the foldable electronic device 2 and may be interpreted as being included in the scope of the various embodiments of the disclosure. With respect to the description of any example electronic device, the same terms and/or the same reference numerals may be used for components that are at least partially identical to, similar to, or related to the components of the foldable electronic device 2. In any example electronic device and the foldable electronic device 2, two components having the same term but different reference numerals may be understood as being substantially identical or as being changed or modified in form.

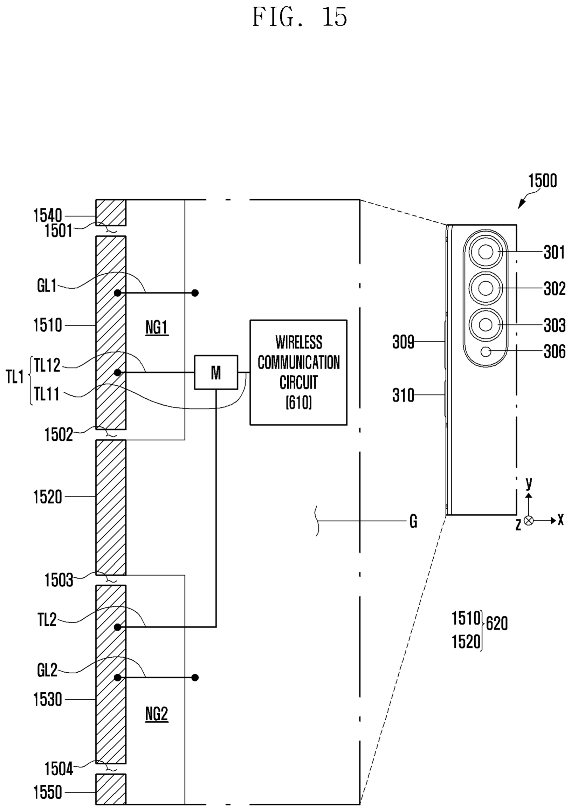

FIG. 15 is a view illustrating a foldable electronic device 1500 according to various embodiments of the disclosure and a portion of the foldable electronic device 1500. It is to be understood that the disclosure conceives and includes all of the combinations of features and/or embodiments disclosed with reference to FIG. 15. That is, all of the combinations of features described below with reference to FIG. 15 are to be considered as being included in the disclosure as specific examples.

Referring to FIG. 15, the foldable electronic device 1500 may include a first conductive portion 1510, a second conductive portion 1520, a third conductive portion 1530, a fourth conductive portion 1540, a fifth conductive portion 1550, a ground area G, a first electrical path TL1, a second electrical path TL2, a third electrical path GL1, a fourth electrical path GL2, a matching circuit M, and/or a wireless communication circuit 610 (e.g., the wireless communication module 192 of FIG. 1).

According to an embodiment, the first conductive portion 1510, the second conductive portion 1520, the third conductive portion 1530, the fourth conductive portion 1540, and the fifth conductive portion 1550 may be included in the first side 2112 (see FIG. 4). The first conductive portion 1510 may be positioned between the second conductive portion 1520 and the fourth conductive portion 1540. The second conductive portion 1520 may be positioned between the first conductive portion 1510 and the third conductive portion 1530. The third conductive portion 1530 may be positioned between the second conductive portion 1520 and the fifth conductive portion 1550. The first conductive portion 1510 and the fourth conductive portion 1540 may be spaced apart from each other with a segmentation portion 1501 interposed therebetween. The first conductive portion 1510 and the second conductive portion 1520 may be spaced apart from each other with a segmentation portion 1502 interposed therebetween. The second conductive portion 1520 and the third conductive portion 1530 may be spaced apart from each other with a segmentation portion 1503 interposed therebetween. The third conductive portion 1530 and the fifth conductive portion 1550 may be spaced apart from each other with a segmentation portion 1504 interposed therebetween.

According to an embodiment, at least one key (e.g., the first key 309 and the second key 310) may be positioned on the second conductive portion 1520.

According to an embodiment, the second conductive portion 1520 corresponding to at least one key (e.g., the first key 309 and the second key 310) may be electrically and/or physically connected to the ground area G.

According to various embodiments, the second conductive portion 1520 may be defined or interpreted as a portion of the ground area G.

According to an embodiment, the first conductive portion 1510 may be spaced apart from the ground area G with a first non-ground area NG1 interposed therebetween. The third conductive portion 1530 may be spaced apart from the ground area G with a second non-ground area NG2 interposed therebetween. The second conductive portion 1520 may be connected to a portion of the ground area G that extends between the first non-ground area NG1 and the second non-ground area NG2.

According to various embodiments, the plurality of components (e.g., the first conductive portion 1510, the second conductive portion 1520, the third conductive portion 1530, the ground area G, the first electrical path TL1, the second electrical path TL2, the third electrical path GL1, the fourth electrical path GL2, the matching circuit M, and/or the wireless communication circuit 610) included in the foldable electronic device 1500 of FIG. 15 and the electrical connection structure among the plurality of components may be implemented by applying and/or modifying at least a part of the embodiment of FIG. 7 or FIG. 8. For example, the electrical connector 750 of FIG. 7 or FIG. 8 may include the second electrical path TL2 and may be disposed across a portion of the ground area G extending between the first non-ground area NG1 and the second non-ground area NG2 (e.g., a portion electrically and/or physically connected to the second conductive portion 1520).

According to an embodiment, the foldable electronic device 1500 may include an antenna structure 620 including the first conductive portion 1510 (e.g., a first antenna radiator) and the third conductive portion 1530 (e.g., a second antenna radiator). In an embodiment, the antenna structure 620 may be configured to resonate in at least one frequency band. The wireless communication circuit 610 may be configured to transmit at least one signal of at least one frequency band to the outside of the foldable electronic device 2 through the antenna structure 620 including the first conductive portion 1510 and the third conductive portion 1530. The wireless communication circuit 610 may be configured to receive at least one signal of at least one frequency band from the outside of the foldable electronic device 2 through the antenna structure 620 including the first conductive portion 1510 and the third conductive portion 1530.

According to an embodiment, the antenna structure 620 may be configured to resonate in a first frequency band (e.g., MB and/or HB) and in a second frequency band (e.g., LB) different from the first frequency band. The wireless communication circuit 610 may be configured to transmit and/or receive at least one first signal of the first frequency band and at least one second signal of the second frequency band through the antenna structure 620 including the first conductive portion 1510 and the third conductive portion 1530.

According to an embodiment, the first electrical path TL1 (e.g., a first transmission line) may electrically connect the first conductive portion 1510 and the wireless communication circuit 610. The first electrical path TL1 may include a first partial electrical path (or a first partial transmission line) TL11 and a second partial electrical path (or a second partial transmission line) TL12. The first partial electrical path TL11 may electrically connect the wireless communication circuit 610 and the matching circuit M. The second partial electrical path TL12 may electrically connect the matching circuit M and the first conductive portion 1510.

According to an embodiment, the second electrical path TL2 (e.g., a second transmission line) may electrically connect the third conductive portion 1530 and the first electrical path TL1.

According to an embodiment, the third electrical path GL1 (e.g., a first grounding line) may electrically connect the first conductive portion 1510 and the ground area G.

According to an embodiment, the fourth electrical path GL2 (e.g., a second grounding line) may electrically connect the third conductive portion 1530 and the ground area G.

According to various embodiments, the third electrical path GL1 or the fourth electrical path GL2 may be omitted.

According to an embodiment, the matching circuit M may electrically connect the first electrical path TL1 (e.g., the first transmission line) and the second electrical path TL2 (e.g., the second transmission line).

According to an embodiment, the first partial electrical path TL11 (e.g., a first partial transmission line) of the first electrical path TL1 may include a single RF port. The wireless communication circuit 610 may provide at least one first signal of a first frequency band and at least one second signal of a second frequency band different from the first frequency band to the single RF port. The wireless communication circuit 610 may provide at least one first signal of the first frequency band and at least one second signal of the second frequency band together or integrally to the single RF port (e.g., integrated feeding). As the integrated feeding, for example, the wireless communication circuit 610 may provide at least one first signal of the first frequency band and at least one second signal of the second frequency band to the single RF point with a time difference. As the integrated feeding, for example, the wireless communication circuit 610 may provide at least one first signal of the first frequency band and at least one second signal of the second frequency band to the single RF point substantially simultaneously.

According to an embodiment, when integrated feeding is applied to the first partial electrical path TL11, the matching circuit M may have a function of matching (e.g., impedance matching) or tuning such that, among a combination of the first conductive portion 1510, the second conductive portion 1520, the third conductive portion 1530, the ground area G, the first non-ground area NG1, and the second non-ground area NG2, the antenna structure 620 including the first conductive portion 1510 and the third conductive portion 1530 smoothly radiates (or transmits and receives) at least one first signal of the first frequency band and at least one second signal of the second frequency band while reducing losses.

According to an embodiment, when integrated feeding is applied to the first partial electrical path TL11, the matching circuit M may have a function of matching (e.g., impedance matching) or tuning such that, among a combination of the first conductive portion 1510, the second conductive portion 1520, the third conductive portion 1530, the ground area G, the first non-ground area NG1, and the second non-ground area NG2, the antenna structure 620 including the first conductive portion 1510 and the third conductive portion 1530 resonates at at least one resonant frequency corresponding to at least one first signal and at least one resonant frequency corresponding to at least one second signal.

According to an embodiment, at least one first signal of the first frequency band and at least one second signal of the second frequency band input to the first electrical path TL1 may be branched by the matching circuit M. For example, by the matching circuit M, at least one first signal of the first frequency band may be provided (or fed) to the antenna structure 620 including the first conductive portion 1510 and the third conductive portion 1530 through the first conductive portion 1510. For example, by the matching circuit M, at least one second signal of the second frequency band may be provided (or fed) to the antenna structure 620 including the first conductive portion 1510 and the third conductive portion 1530 through the third conductive portion 1530.

According to an embodiment, the matching circuit M may be configured to reduce an impedance variation that may occur when at least one second signal is branched from the first electrical path TL1 to the second electrical path TL2. To reduce transmission loss when at least one second signal is branched from the first electrical path TL1 to the second electrical path TL2, the matching circuit M may provide (or form) impedance matching between the first electrical path TL1 and the second electrical path TL2.

According to various embodiments, although not separately illustrated, the foldable electronic device 1500 may further include another antenna radiator configured to resonate in a third frequency band different from the first frequency band and the second frequency band. The foldable electronic device 1500 may further include, for example, the conductive pattern 1301, the fifth electrical path TL3, and the sixth electrical path GL3 according to the example embodiment of FIG. 13.

According to various embodiments, although not separately illustrated, the utilization of the first conductive portion 1510 and the third conductive portion 1530, which are spaced apart from each other with the second conductive portion 1520 corresponding to at least one key interposed therebetween, as antenna radiators, may be applied to example electronic devices of different appearances (e.g., a bar-type or plate-type electronic device, a slidable electronic device, a stretchable electronic device, or a rollable electronic device).

According to various embodiments, the eighth segmentation portion 1400 of FIG. 14, which is provided (or formed) between the first metal E1 and the third metal E3 in place of the first segmentation portion 601, the second segmentation portion 602, and the second metal E2 of FIG. 13, and the eighth non-metal (not separately illustrated) disposed in the eighth segmentation portion 1400 may be applied to the example foldable electronic device 1500 of FIG. 15. For example, the example foldable electronic device 1500 of FIG. 15 may be modified to include a fifth segmentation portion provided (or formed) between the first conductive portion 1510 and the third conductive portion 1530 and a fifth non-metal (or non-conductive portion) disposed in the fifth segmentation portion in place of the segmentation portions 1502 and 1503 and the second conductive portion 1520. The fifth non-metal may, for example, be connected to the first inner non-metal (e.g., the first inner non-metal 720 of FIG. 7) of the first support portion 2111 (see FIG. 4), or may be provided (or formed) integrally with the first inner non-metal. In an embodiment, at least one key (e.g., the first key 309 and the second key 310) may be positioned in the fifth non-metal.

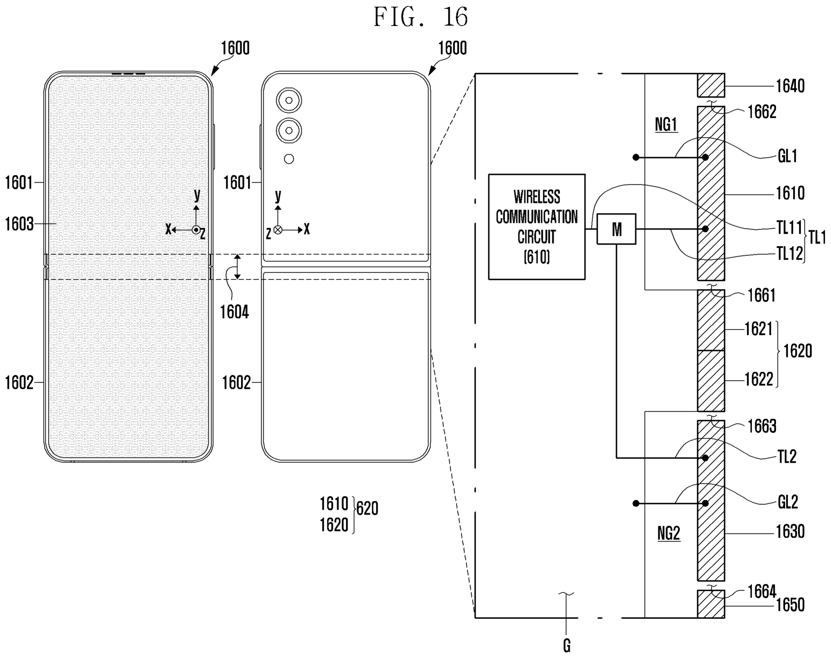

FIG. 16 is a view illustrating a foldable electronic device 1600 according to various embodiments of the disclosure in an unfolded state and a portion of the foldable electronic device 1600. It is to be understood in the disclosure that all the combinations of features and/or embodiments disclosed with reference to FIG. 16 are conceived and included. That is, all of the combinations of features described below with reference to FIG. 16 are to be considered as being included in the disclosure as specific examples.

Referring to FIG. 16, a foldable electronic device 1600 may include a first housing 1601, a second housing 1602, and a flexible display module 1603. The first housing 1601 and the second housing 1602 may be connected by a hinge portion 1604. The foldable electronic device 1600 may be implemented to be foldable based on a center line parallel to the +x-axis, in contrast to the foldable electronic device 2 of FIG. 2, which is implemented to be foldable based on a center line A parallel to the +y-axis.

According to an embodiment, the foldable electronic device 1600 may include a first conductive portion 1610, a second conductive portion 1620, a third conductive portion 1630, a fourth conductive portion 1640, a fifth conductive portion 1650, a ground area G, a first electrical path TL1, a second electrical path TL2, a third electrical path GL1, a fourth electrical path GL2, a matching circuit M, and/or a wireless communication circuit 610 (e.g., the wireless communication module 192 of FIG. 1).

According to an embodiment, the second conductive portion 1620 may be positioned corresponding to the hinge portion 1604 that connects the first housing 1601 and the second housing 1602. The second conductive portion 1620 may include a first partial conductive portion 1621 included in the first housing 1601 and a second partial conductive portion 1622 included in the second housing 1602.

According to an embodiment, a first side of the first housing 1601 (e.g., the first side 2112 of FIG. 5) may include the first conductive portion 1610, the first partial conductive portion 1621 of the second conductive portion 1620, and/or the fourth conductive portion 1640. The first conductive portion 1610 may be positioned between the first partial conductive portion 1621 of the second conductive portion 1620 and the fourth conductive portion 1640. The first conductive portion 1610 may be spaced apart from each other by a segmentation portion 1661 between the first conductive portion 1610 and the first partial conductive portion 1621 of the second conductive portion 1620. The first conductive portion 1610 may be spaced apart from each other by a segmentation portion 1662 between the first conductive portion 1610 and the fourth conductive portion 1640.

According to an embodiment, a second side of the second housing 1602 (e.g., the second side 2212 of FIG. 5) may include the third conductive portion 1630, the second partial conductive portion 1622 of the second conductive portion 1620, and/or the fifth conductive portion 1650. The third conductive portion 1630 may be positioned between the second partial conductive portion 1622 of the second conductive portion 1620 and the fifth conductive portion 1650. The third conductive portion 1630 may be spaced apart from each other by a segmentation portion 1663 between the third conductive portion 1630 and the second partial conductive portion 1622 of the second conductive portion 1620. The third conductive portion 1630 may be spaced apart from each other by a segmentation portion 1664 between the third conductive portion 1630 and the fifth conductive portion 1630.

According to an embodiment, the second conductive portion 1620 may be electrically and/or physically connected to the ground area G.

According to various embodiments, the second conductive portion 1620 may be defined or interpreted as a portion of the ground area G.

According to an embodiment, the first conductive portion 1610 may be spaced apart from the ground area G with a first non-ground area NG1 interposed therebetween. The third conductive portion 1630 may be spaced apart from the ground area G with a second non-ground area NG2 interposed therebetween. The second conductive portion 1620 may be connected to a portion of the ground area G that extends between the first non-ground area NG1 and the second non-ground area NG2.

According to various embodiments, the plurality of components (e.g., the first conductive portion 1610, the second conductive portion 1620, the third conductive portion 1630, the ground area G, the first electrical path TL1, the second electrical path TL2, the third electrical path GL1, the fourth electrical path GL2, the matching circuit M, and/or the wireless communication circuit 610) included in the foldable electronic device 1600 of FIG. 16 and the electrical connection structure among the plurality of components may be implemented by applying and/or modifying at least a part of the embodiment of FIG. 7 or FIG. 8. For example, the electrical connector 750 of FIG. 7 or FIG. 8 may include the second electrical path TL2 and may be disposed across a portion of the ground area G extending between the first non-ground area NG1 and the second non-ground area NG2 (e.g., a portion electrically and/or physically connected to the second conductive portion 1620).

According to an embodiment, the foldable electronic device 1600 may include an antenna structure 620 including the first conductive portion 1610 (e.g., a first antenna radiator) and the third conductive portion 1630 (e.g., a second antenna radiator). The antenna structure 620 may be configured to resonate in at least one frequency band. The wireless communication circuit 610 may be configured to transmit at least one signal of at least one frequency band to the outside of the foldable electronic device 1600 through the antenna structure 620 including the first conductive portion 1610 and the third conductive portion 1630. The wireless communication circuit 610 may be configured to receive at least one signal of at least one frequency band from the outside of the foldable electronic device 1600 through the antenna structure 620 including the first conductive portion 1610 and the third conductive portion 1630.

According to an embodiment, the antenna structure 620 may be configured to resonate in a first frequency band and a second frequency band different from the first frequency band. The wireless communication circuit 610 may be configured to transmit and/or receive at least one first signal of the first frequency band and at least one second signal of the second frequency band through the antenna structure 620 including the first conductive portion 1610 and the third conductive portion 1630.

According to an embodiment, the first electrical path TL1 (e.g., a first transmission line) may electrically connect the first conductive portion 1610 and the wireless communication circuit 610. The first electrical path TL1 may include a first partial electrical path (or a first partial transmission line) TL11 and a second partial electrical path (or a second partial transmission line) TL12. The first partial electrical path TL11 may electrically connect the wireless communication circuit 610 and the matching circuit M. The second partial electrical path TL12 may electrically connect the matching circuit M and the first conductive portion 1610.

According to an embodiment, the second electrical path TL2 (e.g., a second transmission line) may electrically connect the third conductive portion 1630 and the first electrical path TL1.

According to an embodiment, the second electrical path TL2 (e.g., the second transmission line) may be disposed across or extended across the hinge portion 1604.

According to an embodiment, the third electrical path GL1 (e.g., a first grounding line) may electrically connect the first conductive portion 1610 and the ground area G.

According to an embodiment, the fourth electrical path GL2 (e.g., a second grounding line) may electrically connect the third conductive portion 1630 and the ground area G.

According to various embodiments, the third electrical path GL1 or the fourth electrical path GL2 may be omitted.

According to an embodiment, the matching circuit M may electrically connect the first electrical path TL1 (e.g., the first transmission line) and the second electrical path TL2 (e.g., the second transmission line).

According to an embodiment, the first partial electrical path TL11 (e.g., a first partial transmission line) of the first electrical path TL1 may include a single RF port. The wireless communication circuit 610 may provide at least one first signal of a first frequency band and at least one second signal of a second frequency band different from the first frequency band to the single RF port. The wireless communication circuit 610 may provide at least one first signal of the first frequency band and at least one second signal of the second frequency band together or integrally to the single RF port (e.g., integrated feeding). As the integrated feeding, for example, the wireless communication circuit 610 may provide at least one first signal of the first frequency band and at least one second signal of the second frequency band to the single RF point with a time difference. As the integrated feeding, for example, the wireless communication circuit 610 may provide at least one first signal of the first frequency band and at least one second signal of the second frequency band to the single RF point substantially simultaneously.

According to an embodiment, when integrated feeding is applied to the first partial electrical path TL11, the matching circuit M may have a function of matching (e.g., impedance matching) or tuning such that, among a combination of the first conductive portion 1610, the second conductive portion 1620, the third conductive portion 1630, the ground area G, the first non-ground area NG1, and the second non-ground area NG2, the antenna structure 620 including the first conductive portion 1610 and the third conductive portion 1630 smoothly radiates (or transmits and receives) at least one first signal of the first frequency band and at least one second signal of the second frequency band while reducing losses.

According to an embodiment, when integrated feeding is applied to the first partial electrical path TL11, the matching circuit M may have a function of matching (e.g., impedance matching) or tuning such that, among a combination of the first conductive portion 1610, the second conductive portion 1620, the third conductive portion 1630, the ground area G, the first non-ground area NG1, and the second non-ground area NG2, the antenna structure 620 including the first conductive portion 1610 and the third conductive portion 1630 resonates at at least one resonant frequency corresponding to at least one first signal and at least one resonant frequency corresponding to at least one second signal.

According to an embodiment, at least one first signal of the first frequency band and at least one second signal of the second frequency band input to the first electrical path TL1 may be branched by the matching circuit M. At least one first signal of the first frequency band may be provided (or fed) to the antenna structure 620 including the first conductive portion 1610 and the third conductive portion 1630 through the first conductive portion 1610. At least one second signal of the second frequency band may be provided (or fed) to the antenna structure 620 including the first conductive portion 1610 and the third conductive portion 1630 through the third conductive portion 1630.

According to an embodiment, the matching circuit M may be configured to reduce an impedance variation that may occur when at least one second signal is branched from the first electrical path TL1 to the second electrical path TL2. To reduce transmission loss when at least one second signal is branched from the first electrical path TL1 to the second electrical path TL2, the matching circuit M may provide (or form) impedance matching between the first electrical path TL1 and the second electrical path TL2.\

According to various embodiments, although not separately illustrated, the foldable electronic device 1600 may further include another antenna radiator configured to resonate in a third frequency band. The foldable electronic device 1600 may be implemented to further include, for example, the conductive pattern 1301, the fifth electrical path TL3, and the sixth electrical path GL3 according to the example embodiment of FIG. 13.

According to various embodiments, although not separately illustrated, the utilization of the first conductive portion 1610 and the third conductive portion 1630, which are spaced apart from each other with the second conductive portion 1620 corresponding to at least one key interposed therebetween, as antenna radiators, may be applied to the foldable electronic device 2 of FIG. 2.

According to various embodiments, the eighth segmentation portion 1400 of FIG. 14, which is provided (or formed) between the first metal E1 and the third metal E3 in place of the first segmentation portion 601, the second segmentation portion 602, and the second metal E2 of FIG. 13, and the eighth non-metal (not separately illustrated) disposed in the eighth segmentation portion 1400 may be applied to the example foldable electronic device 1600 of FIG. 16. For example, the example foldable electronic device 1600 of FIG. 16 may be modified to include a non-conductive portion (or non-metal) disposed between the first conductive portion 1610 and the third conductive portion 1630 in place of the segmentation portions 1661 and 1662 and the second conductive portion 1620. The non-conductive portion disposed between the first conductive portion 1610 and the third conductive portion 1630 may include a first partial non-conductive portion included in the first housing 1601 and a second partial non-conductive portion included in the second housing 1602. The first partial non-conductive portion may, for example, be connected to, or provided (or formed) integrally with, a first inner non-metal (e.g., the first inner non-metal 720 of FIG. 7) included in a first support portion (e.g., the first support portion 2111 of FIG. 4) positioned inside the first housing 1601. The second partial non-conductive portion may, for example, be connected to, or provided (or formed) integrally with, a second inner non-metal included in a second support portion (e.g., the second support portion 2211 of FIG. 4) positioned inside the second housing 1602.

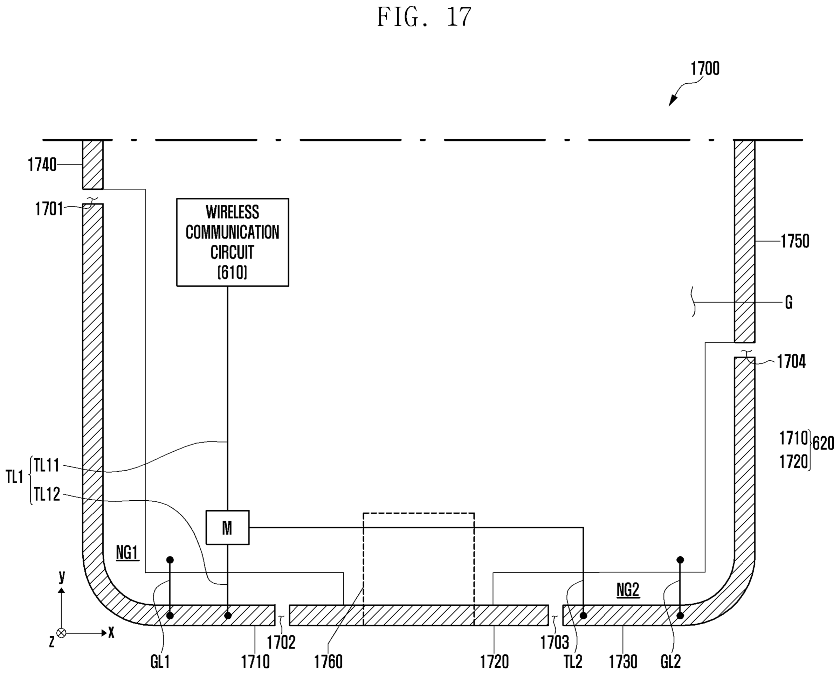

FIG. 17 is a view illustrating a bar-type electronic device 1700 according to various embodiments of the disclosure. It is to be understood in the disclosure that all the combinations of features and/or embodiments disclosed with reference to FIG. 17 are conceived and included. That is, all of the combinations of features described below with reference to FIG. 17 are to be considered as being included in the disclosure as specific examples.

Referring to FIG. 17, the bar-type electronic device 1700 may include a first conductive portion 1710, a second conductive portion 1720, a third conductive portion 1730, a fourth conductive portion 1740, a fifth conductive portion 1750, a ground area G, a first electrical path TL1, a second electrical path TL2, a third electrical path GL1, a fourth electrical path GL2, a matching circuit M, and/or a wireless communication circuit 610 (e.g., the wireless communication module 192 of FIG. 1).

According to an embodiment, although not separately illustrated, the bar-type electronic device 1700 may include a front surface plate (or front surface cover), a rear surface plate (or rear surface cover), and/or a side (or side surface member or side surface bezel structure). The front surface plate may provide (or form) at least a portion of the front surface of the bar-type electronic device 1700. The rear surface plate may provide (or form) at least a portion of the rear surface of the bar-type electronic device 1700. The side may provide (or form) at least a portion of the side surface of the bar-type electronic device 1700.

According to an embodiment, the first conductive portion 1710, the second conductive portion 1720, the third conductive portion 1730, the fourth conductive portion 1740, and the fifth conductive portion 1750 may be included in the side (not separately illustrated) that forms at least a portion of the side surface of the bar-type electronic device 1700. The first conductive portion 1710 may be positioned between the second conductive portion 1720 and the fourth conductive portion 1740. The second conductive portion 1720 may be positioned between the first conductive portion 1710 and the third conductive portion 1730. The third conductive portion 1730 may be positioned between the second conductive portion 1720 and the fifth conductive portion 1750. The first conductive portion 1710 and the fourth conductive portion 1740 may be spaced apart from each other with a segmentation portion 1701 interposed therebetween. The first conductive portion 1710 and the second conductive portion 1720 may be spaced apart from each other with a segmentation portion 1702 interposed therebetween. The second conductive portion 1720 and the third conductive portion 1730 may be spaced apart from each other with a segmentation portion 1703 interposed therebetween. The third conductive portion 1730 and the fifth conductive portion 1750 may be spaced apart from each other with a segmentation portion 1704 interposed therebetween.

According to an embodiment, a connection terminal (e.g., a connector) 1760 may be positioned corresponding to the second conductive portion 1720. The second conductive portion 1720 may include a connection terminal hole (e.g., connector hole) corresponding to the connection terminal 1760 (not separately illustrated).

According to an embodiment, the second conductive portion 1720 corresponding to the connection terminal 1760 may be electrically and/or physically connected to the ground area G.

According to an embodiment, the first conductive portion 1710 may be spaced apart from the ground area G with a first non-ground area NG1 interposed therebetween. The third conductive portion 1730 may be spaced apart from the ground area G with a second non-ground area NG2 interposed therebetween. The second conductive portion 1720 may be connected to a portion of the ground area G that extends between the first non-ground area NG1 and the second non-ground area NG2.

According to various embodiments, the plurality of components (e.g., the first conductive portion 1710, the second conductive portion 1720, the third conductive portion 1730, the ground area G, the first electrical path TL1, the second electrical path TL2, the third electrical path GL1, the fourth electrical path GL2, the matching circuit M, and/or the wireless communication circuit 610) included in the bar-type electronic device 1700 of FIG. 17 and the electrical connection structure among the plurality of components may be implemented by applying and/or modifying at least a part of the embodiment of FIG. 7 or FIG. 8. For example, the electrical connector 750 of FIG. 7 or FIG. 8 may include the second electrical path TL2 and may be disposed across a portion of the ground area G extending between the first non-ground area NG1 and the second non-ground area NG2 (e.g., a portion electrically and/or physically connected to the second conductive portion 1720).

According to an embodiment, the bar-type electronic device 1700 may include an antenna structure 620 including the first conductive portion 1710 (e.g., a first antenna radiator) and the third conductive portion 1730 (e.g., a second antenna radiator). The antenna structure 620 may be configured to resonate in at least one frequency band. The wireless communication circuit 610 may be configured to transmit at least one signal of at least one frequency band to the outside of the bar-type electronic device 1700 through the antenna structure 620 including the first conductive portion 1710 and the third conductive portion 1730. The wireless communication circuit 610 may be configured to receive at least one signal of at least one frequency band from the outside of the bar-type electronic device 1700 through the antenna structure 620 including the first conductive portion 1710 and the third conductive portion 1730.

According to an embodiment, the antenna structure 620 may be configured to resonate in a first frequency band (e.g., MB and/or HB) and in a second frequency band (e.g., LB) different from the first frequency band. The wireless communication circuit 610 may be configured to transmit and/or receive at least one first signal of the first frequency band and at least one second signal of the second frequency band through the antenna structure 620 including the first conductive portion 1710 and the third conductive portion 1730.

According to an embodiment, the first electrical path TL1 (e.g., a first transmission line) may electrically connect the first conductive portion 1710 and the wireless communication circuit 610. The first electrical path TL1 may include a first partial electrical path (or a first partial transmission line) TL11 and a second partial electrical path (or a second partial transmission line) TL12. The first partial electrical path TL11 may electrically connect the wireless communication circuit 610 and the matching circuit M. The second partial electrical path TL12 may electrically connect the matching circuit M and the first conductive portion 1710.

According to an embodiment, the second electrical path TL2 (e.g., a second transmission line) may electrically connect the third conductive portion 1730 and the first electrical path TL1.

According to an embodiment, the second electrical path TL2 (e.g., the second transmission line) may be disposed across or extended across the connection terminal 1760.

According to an embodiment, the third electrical path GL1 (e.g., a first grounding line) may electrically connect the first conductive portion 1710 and the ground area G.

According to an embodiment, the fourth electrical path GL2 (e.g., a second grounding line) may electrically connect the third conductive portion 1730 and the ground area G.

According to various embodiments, the third electrical path GL1 or the fourth electrical path GL2 may be omitted.

According to an embodiment, the matching circuit M may electrically connect the first electrical path TL1 (e.g., the first transmission line) and the second electrical path TL2 (e.g., the second transmission line).

According to an embodiment, the first partial electrical path TL11 (e.g., a first partial transmission line) of the first electrical path TL1 may include a single RF port. The wireless communication circuit 610 may provide at least one first signal of a first frequency band and at least one second signal of a second frequency band different from the first frequency band to the single RF port. The wireless communication circuit 610 may provide at least one first signal of the first frequency band and at least one second signal of the second frequency band together or integrally to the single RF port (e.g., integrated feeding). As the integrated feeding, for example, the wireless communication circuit 610 may provide at least one first signal of the first frequency band and at least one second signal of the second frequency band to the single RF port with a time difference. As the integrated feeding, for example, the wireless communication circuit 610 may provide at least one first signal of the first frequency band and at least one second signal of the second frequency band to the single RF port substantially simultaneously.

According to an embodiment, when integrated feeding is applied to the first partial electrical path TL11, the matching circuit M may have a function of matching (e.g., impedance matching) or tuning such that, among a combination of the first conductive portion 1710, the second conductive portion 1720, the third conductive portion 1730, the ground area G, the first non-ground area NG1, and the second non-ground area NG2, the antenna structure 620 including the first conductive portion 1710 and the third conductive portion 1730 smoothly radiates (or transmits and receives) at least one first signal of the first frequency band and at least one second signal of the second frequency band while reducing losses.

According to an embodiment, when integrated feeding is applied to the first partial electrical path TL11, the matching circuit M may have a function of matching (e.g., impedance matching) or tuning such that, among a combination of the first conductive portion 1710, the second conductive portion 1720, the third conductive portion 1730, the ground area G, the first non-ground area NG1, and the second non-ground area NG2, the antenna structure 620 including the first conductive portion 1710 and the third conductive portion 1730 resonates at at least one resonant frequency corresponding to at least one first signal and at least one resonant frequency corresponding to at least one second signal.

According to an embodiment, at least one first signal of the first frequency band and at least one second signal of the second frequency band input to the first electrical path TL1 may be branched by the matching circuit M. By the matching circuit M, at least one first signal of the first frequency band may be provided (or fed) to the antenna structure 620 including the first conductive portion 1710 and the third conductive portion 1730 through the first conductive portion 1710. By the matching circuit M, at least one second signal of the second frequency band may be provided (or fed) to the antenna structure 620 including the first conductive portion 1710 and the third conductive portion 1730 through the third conductive portion 1730.

According to an embodiment, the matching circuit M may be configured to reduce an impedance variation that may occur when at least one second signal is branched from the first electrical path TL1 to the second electrical path TL2. To reduce transmission loss when at least one second signal is branched from the first electrical path TL1 to the second electrical path TL2, the matching circuit M may provide (or form) impedance matching between the first electrical path TL1 and the second electrical path TL2.

According to various embodiments, although not separately illustrated, the bar-type electronic device 1700 may further include another antenna radiator configured to resonate in a third frequency band. The bar-type electronic device 1700 may be implemented to further include, for example, the conductive pattern 1301, the fifth electrical path TL3, and the sixth electrical path GL3 according to the example embodiment of FIG. 13.

According to various embodiments, although not separately illustrated, the utilization of the first conductive portion 1710 and the third conductive portion 1730, which are spaced apart from each other with the second conductive portion 1720 corresponding to the connection terminal 1760 interposed therebetween, as antenna radiators, may be applied to example electronic devices of different appearances (e.g., the foldable electronic device 2 or 1600, a slidable electronic device, a stretchable electronic device, or a rollable electronic device).

According to various embodiments, the eighth segmentation portion 1400 of FIG. 14, which is provided (or formed) between the first metal E1 and the third metal E3 in place of the first segmentation portion 601, the second segmentation portion 602, and the second metal E2 of FIG. 13, and the eighth non-metal (not separately illustrated) disposed in the eighth segmentation portion 1400 may be applied to the example bar-type electronic device 1700 of FIG. 17. For example, the example bar-type electronic device 1700 of FIG. 17 may be modified to include a non-conductive portion (or non-metal) disposed between the first conductive portion 1710 and the third conductive portion 1730 in place of the segmentation portions 1701 and 1702 and the second conductive portion 1720. The non-conductive portion disposed between the first conductive portion 1710 and the third conductive portion 1730 may be connected to an inner non-metal (e.g., the first inner non-metal 720 of FIG. 7) included in a support portion (e.g., the first support portion 2111 of FIG. 4) disposed inside the bar-type electronic device 1700, or may be provided (or formed) integrally with the inner non-metal.

According to an example embodiment of the disclosure, an electronic device (e.g., the foldable electronic device 2) may include a side (e.g., the first side 2112), a wireless communication circuit 610, a first electrical path TL1, and a second electrical path TL2. The side may provide at least a portion of a side surface of the electronic device. The side may include a first conductive portion (e.g., the first metal E1), a second conductive portion (e.g., the second metal E2), and a third conductive portion (e.g., the third metal E3) that are physically separated from each other. The wireless communication circuit 610 may be configured to transmit and/or receive a signal of at least one selected or predetermined frequency band through the first conductive portion and the third conductive portion. The first electrical path TL1 may be configured to electrically connect the first conductive portion and the wireless communication circuit 610. The second electrical path TL2 may be configured to electrically connect the third conductive portion and the first electrical path TL1. The second conductive portion may be positioned between the first conductive portion and the third conductive portion, and may be electrically and/or physically connected to a ground area G included in the electronic device.

According to an example embodiment of the disclosure, the electronic device (e.g., the foldable electronic device 2) may further include a matching circuit M configured to electrically connect the first electrical path TL1 and the second electrical path TL2.

According to an example embodiment of the disclosure, the first electrical path TL1 may include a first partial electrical path TL11 and a second partial electrical path TL12. The first partial electrical path TL11 may be configured to electrically connect the wireless communication circuit 610 and the matching circuit M. The second partial electrical path TL12 may be configured to electrically connect the first conductive portion E1 and the matching circuit M.

According to an example embodiment of the disclosure, the electronic device (e.g., a foldable electronic device 2) may include a third electrical path GL1 configured to electrically connect the first conductive portion (e.g., the first metal E1) and the ground area G.

According to an example embodiment of the disclosure, the electronic device (e.g., the foldable electronic device 2) may include a fourth electrical path GL2 configured to electrically connect the third conductive portion (e.g., the third metal E3) and the ground area G.

According to an example embodiment of the disclosure, the electronic device (e.g., the foldable electronic device 2) may include a conductive pattern 1301 and a fifth electrical path TL3 configured to electrically connect the conductive pattern 1301 and the wireless communication circuit 610. The second electrical path TL2 and the fifth electrical path TL3 may be included in an integral or single electrical connector 750.

According to an example embodiment of the disclosure, the wireless communication circuit 610 may be configured to transmit and/or receive, through the conductive pattern 1301, a signal of a frequency band different from a frequency band corresponding to the first conductive portion (e.g., the first metal E1) and the third conductive portion (e.g., the third metal E3).

According to an example embodiment of the disclosure, the wireless communication circuit 610 may include a first wireless communication circuit electrically connected to the first electrical path TL1, and a second wireless communication circuit electrically connected to the fifth electrical path TL3.

According to an example embodiment of the disclosure, the second conductive portion (e.g., the second metal E2) may include a pen hole PH corresponding to a pen input device 27.

According to an example embodiment of the disclosure, the ground area G may include a pen space portion 712 extending from the second conductive portion (e.g., the second metal E2) to correspond to the pen hole PH so as to accommodate the pen input device 27. The second electrical path TL2 may be disposed across the pen space portion 712.

According to an example embodiment of the disclosure, the second conductive portion 1520 may include at least one key hole corresponding to at least one key 309 and 310.

According to an example embodiment of the disclosure, the electronic device (e.g., the foldable electronic device 1600) may include a first housing 1601, a second housing 1602, and a hinge portion 1604 configured to connect the first housing 1601 and the second housing 1602. The first conductive portion 1610 may be included in the first housing 1601. The third conductive portion 1630 may be included in the second housing 1602. The second conductive portion 1620 may include a first partial conductive portion 1621 included in the first housing 1601 and a second partial conductive portion 1622 included in the second housing 1602. The second electrical path TL2 may be disposed across the hinge portion 1604.

According to an example embodiment of the disclosure, the second conductive portion 1720 may include a connector hole corresponding to a connector (e.g., the connector 1760).

According to an example embodiment of the disclosure, the first conductive portion (e.g., the first metal E1) may be spaced apart from the ground area G with a first non-ground area NG1 interposed therebetween. The third conductive portion (e.g., the third metal E3) may be spaced apart from the ground area G with a second non-ground area NG2 interposed therebetween. The second conductive portion (e.g., the second metal E2) may be connected to a part of the ground area G extending between the first non-ground area NG1 and the second non-ground area NG2.

According to an example embodiment of the disclosure, the second electrical path TL2 may be disposed across the portion of the ground area G extending between the first non-ground area NG1 and the second non-ground area NG2.

According to an example embodiment of the disclosure, an electronic device (e.g., the foldable electronic device 2) may include a side (e.g., a first side 2112), a wireless communication circuit 610, a first electrical path TL1, a second electrical path TL2, and a matching circuit M. The side may provide at least a portion of a side surface of the electronic device. The side may include a first conductive portion (e.g., the first metal E1), a second conductive portion (e.g., the second metal E2), and a third conductive portion (e.g., the third metal E3) that are physically separated from each other. The wireless communication circuit 610 may be configured to transmit and/or receive a signal of at least one selected or predetermined frequency band through the first conductive portion and the third conductive portion. The first electrical path TL1 may be configured to electrically connect the first conductive portion and the wireless communication circuit 610. The second electrical path TL2 may be configured to electrically connect the third conductive portion and the first electrical path TL1. The matching circuit M may be configured to electrically connect the first electrical path TL1 and the second electrical path TL2. The second conductive portion may be positioned between the first conductive portion and the third conductive portion. The second conductive portion may be electrically and/or physically connected to a ground area G included in the electronic device. The wireless communication circuit 610 may be configured to provide, to the first electrical path TL1, a first signal of a first frequency band and a second signal of a second frequency band different from the first frequency band.

According to an example embodiment of the disclosure, the first electrical path TL1 may include a first partial electrical path TL11 and a second partial electrical path TL12. The first partial electrical path TL11 may be configured to electrically connect the wireless communication circuit 610 and the matching circuit M. The second partial electrical path TL12 may be configured to electrically connect the first conductive portion E1 and the matching circuit M.

According to an example embodiment of the disclosure, the second conductive portion (e.g., the second metal E2) may include a pen hole PH corresponding to a pen input device 27. The ground area G may include a pen space portion 712 configured to accommodate the pen input device 27 to correspond to the pen hole PH. The pen space portion 712 may extend from the second conductive portion. The second electrical path TL2 may be disposed across the pen space portion 712.

According to an example embodiment of the disclosure, the electronic device (e.g., the foldable electronic device 2)) may include a conductive pattern 1301 and a third electrical path (e.g., the fifth electrical path TL3) configured to electrically connect the conductive pattern 1301 and the wireless communication circuit 610. The second electrical path TL2 and the third electrical path (e.g., the fifth electrical path TL3) may be included in an integral or single electrical connector 750.

According to an example embodiment of the disclosure, the first conductive portion (e.g., the first metal E1) may be spaced apart from the ground area G with a first non-ground area NG1 interposed therebetween. The third conductive portion (e.g., the third metal E3) may be spaced apart from the ground area G with a second non-ground area NG2 interposed therebetween. The second conductive portion (e.g., the second metal E2) may be connected to a part of the ground area G extending between the first non-ground area NG1 and the second non-ground area NG2. The second electrical path TL2 may be disposed across the portion of the ground area G extending between the first non-ground area NG1 and the second non-ground area NG2.

Embodiments disclosed in the disclosure and drawings are merely presented as specific examples to easily describe technical content and aid understanding of the disclosure, and are not intended to limit the scope of the disclosure. Accordingly, the scope of the various embodiments of the disclosure should be construed as including changes or modifications of the embodiments in addition to the embodiments disclosed herein. In addition, it will be appreciated that any embodiment(s) described herein may be used with any other embodiment(s) described herein. In particular, it is emphasized that although the disclosure is presented in a form that provides a number of embodiments, some of the embodiments are linked only by reference to the same drawing or drawings. The disclosure is to be understood to include all of the combinations of two (or more) embodiments unless there is an obvious contradiction therebetween. That is, when features are presented as optional in the disclosure, all of the combinations of those optional features are included in the disclosure.

## Claims

1. An electronic device (2) comprising:
a side (2112) configured to provide at least a portion of a side surface of the electronic device (2), the side (2112) comprising a first conductive portion (E1), a second conductive portion (E2), and a third conductive portion (E3) that are physically separated from each other;
a wireless communication circuit (610) configured to transmit and/or receive a signal of at least one selected or predetermined frequency band through the first conductive portion (E1) and the third conductive portion (E3);
a first electrical path (TL1) configured to electrically connect the first conductive portion (E1) and the wireless communication circuit (610); and
a second electrical path (TL2) configured to electrically connect the third conductive portion (E3) and the first electrical path (TL1),
wherein the second conductive portion (E2) is positioned between the first conductive portion (E1) and the third conductive portion (E3), and is electrically and/or physically connected to a ground area (G) included in the electronic device (2).

2. The electronic device of claim 1,
a matching circuit (M) electrically connecting the first electrical path (TL1) and the second electrical path (TL2).

3. The electronic device of claim 2, wherein the first electrical path (TL1) comprises:
a first partial electrical path (TL11) configured to electrically connect the wireless communication circuit (610) and the matching circuit (M), and
a second partial electrical path (TL12) configured to electrically connect the first conductive portion (E1) and the matching circuit (M).

4. The electronic device of any one of claims 1 to 3,
a third electrical path (GL1) configured to electrically connect the first conductive portion (E1) and the ground area (G).

5. The electronic device of any one of claims 1 to 4,
a fourth electrical path (GL2) configured to electrically connect the third conductive portion (E3) and the ground area (G).

6. The electronic device of any one of claims 1 to 5,
a conductive pattern (1301); and
a fifth electrical path (TL3) configured to electrically connect the conductive pattern (1301) and the wireless communication circuit (610),
wherein the second electrical path (TL2) and the fifth electrical path (TL3) are included in an integral or single electrical connector (750).

7. The electronic device of claim 6, wherein the wireless communication circuit (610) is configured to transmit and/or receive, through the conductive pattern (1301), a signal of a frequency band different from a frequency band corresponding to the first conductive portion (E1) and the third conductive portion (E3).

8. The electronic device of claim 6 or 7, wherein the wireless communication circuit (610) comprises: a first wireless communication circuit electrically connected to the first electrical path (TL1), and a second wireless communication circuit electrically connected to the fifth electrical path (TL3).

9. The electronic device of any one of claims 1 to 8, wherein the second conductive portion (E2) comprises a pen hole (PH) corresponding to a pen input device (27).

10. The electronic device of claim 9, wherein the ground area (G) comprises a pen space portion (712) extending from the second conductive portion (E2) to correspond to the pen hole (PH) so as to accommodate the pen input device (27), and wherein the second electrical path (TL2) is disposed across the pen space portion (712).

11. The electronic device of any one of claims 1 to 8, wherein the second conductive portion (1520) comprises at least one key hole corresponding to at least one key (309, 310).

12. The electronic device of any one of claims 1 to 8, wherein the electronic device (1600) comprises a first housing (1601), a second housing (1602), and a hinge portion (1604) configured to connect the first housing (1601) and the second housing (1602),
wherein the first conductive portion (1610) is included in the first housing (1601),
wherein the third conductive portion (1630) is included in the second housing (1602),
wherein the second conductive portion (1620) comprises a first partial conductive portion (1621) included in the first housing (1601), and a second partial conductive portion (1622) included in the second housing (1602), and
wherein the second electrical path (TL2) is disposed across the hinge portion (1604).

13. The electronic device of any one of claims 1 to 8, wherein the second conductive portion (1720) comprises a connector hole corresponding to a connector (1760).

14. The electronic device of any one of claims 1 to 13, wherein the first conductive portion (E1) is spaced apart from the ground area (G) with a first non-ground area (NG1) interposed therebetween,
wherein the third conductive portion (E3) is spaced apart from the ground area (G) with a second non-ground area (NG2) interposed therebetween, and
wherein the second conductive portion (E2) is connected to a portion of the ground area (G) extending between the first non-ground area (NG1) and the second non-ground area (NG2).

15. The electronic device of claim 14, wherein the second electrical path (TL2) is disposed across the portion of the ground area (G) extending between the first non-ground area (NG1) and the second non-ground area (NG2).
